(19) Europäisches Patentamt
European Patent Office
Office européen des brevets

(11) **EP 3 443 228 B1**

(12) **EUROPÄISCHE PATENTSCHRIFT**

(45) Veröffentlichungstag und Bekanntmachung des Hinweises auf die Patenterteilung:
**03.01.2024 Patentblatt 2024/01**

(21) Anmeldenummer: **17726540.2**

(22) Anmeldetag: **12.04.2017**

(51) Internationale Patentklassifikation (IPC):
**F04D 15/00** *(2006.01)* **F24D 19/10** *(2006.01)*

(52) Gemeinsame Patentklassifikation (CPC):
**F04D 15/0066; F24D 19/1012; F04D 15/0077;**
**Y02B 30/70**

(86) Internationale Anmeldenummer:
**PCT/EP2017/000478**

(87) Internationale Veröffentlichungsnummer:
**WO 2017/178115 (19.10.2017 Gazette 2017/42)**

(54) **KREISELPUMPENAGGREGAT UND VERFAHREN ZU SEINER BETRIEBSEINSTELLUNG**

CENTRIFGUAL PUMP UNIT AND METHOD FOR ADJUSTING THE OPERATION THEREOF

ENSEMBLE POMPE CENTRIFUGE ET PROCÉDÉ DE RÉGLAGE DE SON FONCTIONNEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.04.2016 DE 102016004458**

(43) Veröffentlichungstag der Anmeldung:
**20.02.2019 Patentblatt 2019/08**

(73) Patentinhaber: **WILO SE**
**44263 Dortmund (DE)**

(72) Erfinder:
• **SCHMIED, Stephan**
**44263 Dortmund (DE)**
• **GROßE WESTHOFF, Edgar, Dr.**
**44263 Dortmund (DE)**
• **KETTNER, Thorsten, Dr.**
**44263 Dortmund (DE)**
• **ECKARDT, Nils**
**44263 Dortmund (DE)**

(74) Vertreter: **Cohausz Hannig Borkowski Wißgott Patentanwaltskanzlei GbR**
**Schumannstraße 97-99**
**40237 Düsseldorf (DE)**

(56) Entgegenhaltungen:
EP-A2- 1 961 963 US-A1- 2004 120 804
US-A1- 2005 252 205 US-A1- 2010 166 570

**Beschreibung**

Die Erfindung betrifft ein Verfahren zur Betriebseinstellung eines elektronisch gesteuerten oder geregelten Kreiselpumpenaggregats in einem hydraulischen System, insbesondere bei einer Erstinbetriebnahme dieses Kreiselpumpenaggregats. Ferner betrifft die Erfindung ein Kreiselpumpenaggregat und ein Computerprogrammprodukt zur Ausführung des Verfahrens.

Pumpenaggregate, die in hydraulischen Fördersystemen wie beispielsweise in einem zentralen Heizungs- oder Kühlsystem oder einer solarthermischen Anlage integriert sind, werden für einen energieoptimalen Betrieb in ihrer Leistung bekannterweise regelmäßig an dieses hydraulische System angepasst. Dies erfolgt durch eine elektronische Regelung oder Steuerung. Die genannten Systeme sind vor allem Kreislaufsysteme, in denen das Fördermedium von einer Zentraleinheit zu den einzelnen Verbrauchern im Kreis gefördert wird. Im Falle einer Heizungsanlage sind beispielsweise das Fördermedium eine Wärme transportierende Flüssigkeit, die Zentraleinheit eine Heizquelle wie z.B. ein Brenner, und die Verbraucher Heizkörper oder Heizflächen beispielsweise einer Fußbodenheizung. Im Falle eines Kühlsystems sind das Fördermedium eine Kühlflüssigkeit, die Zentraleinheit ein Kühlaggregat und die Verbraucher beispielsweise Kühldecken.

Durch die Rohrleitungen, Verbraucher und Stellglieder (z.B. Thermostatventile) im System entstehen Druckverluste, die von dem Pumpenaggregat überwunden werden müssen. Hierzu muss das Pumpenaggregat eine erforderliche Förderhöhe H aufbringen, die immer dann vom aktuellen Förderstrom Q abhängig ist, wenn der zu überwindende Druckverlust zumindest teilweise auch in Teilstrecken entsteht, die vom Förderstrom zu den einzelnen Verbrauchern gemeinsam durchströmt werden, d.h. in denjenigen Strecken, von denen Rohrleitungen zu den einzelnen Verbrauchern oder Gruppen von Verbrauchern abzweigen. Hydraulische Rohrleitungsnetze besitzen deshalb Anlagenkurven $H_A$, bei denen der Druckverlust vom Quadrat des Volumenstroms abhängt. Die Anlagenkurve $H_A$ ist folgemäßig im sogenannten H-Q-Diagramm parabelförmig. Durch das Öffnen und Schließen der Stellglieder, beispielsweise der Thermostatventile ändert sich partiell aber auch global der hydraulische Widerstand des Rohrleitungsnetzes, so dass die Parabel der Anlagenkurve $H_A$ mal flacher und mal steiler ist.

Um die Leistung der Pumpe an den tatsächlichen Bedarf der Anlage anzupassen, sind in der Heizungs- und Klimatechnik Regelkurven etabliert, bei denen durch Veränderung der Pumpendrehzahl die Förderhöhe H des Pumpenaggregats über dem Förderstrom Q konstant gehalten wird, sogenannte Konstantdruckkurven ($\Delta$p-c), oder proportional hierzu geregelt wird, sogenannte Proportionaldruckkurven ($\Delta$p-v ).

Diese Regelkurven sind an dem Pumpenaggregat meist direkt auswählbar und/ oder einstellbar, entweder an einer mit der Pumpeneinheit baulich vereinigten Pumpenelektronik oder an einer fernab der Pumpeneinheit, beispielsweise zentral angeordneten Pumpenelektronik. Zum Einstellen einer Regelkurve sind verschiedene Bedienkonzepte bekannt. Bei älteren Pumpen erfolgt die Auswahl einer von zwei oder drei festeingestellten Regelkurve über einen rastenden Drehknopf. Bei anderen Pumpen kann die Regelkurve zwar stufenlos, allerdings nur grob vorgegeben werden, beispielsweise mit Hilfe eines Potentiometers oder Impulsgebers, das mechanisch mit einem Drehknopf verbunden ist. Neben dem Drehknopf zeigt eine Skala ungefähr die gewählte Regelkurve gemäß dem Kennfeld im Katalog an. Daneben sind komplexere und bedienfreundlichere Bedienkonzepte bei Pumpen bekannt, deren Elektronik über ein Display verfügt, über das die Einstellung der entsprechenden Regelkurve vorgenommen werden kann. Dies ermöglicht eine genauere Einstellung der Regelkurve.

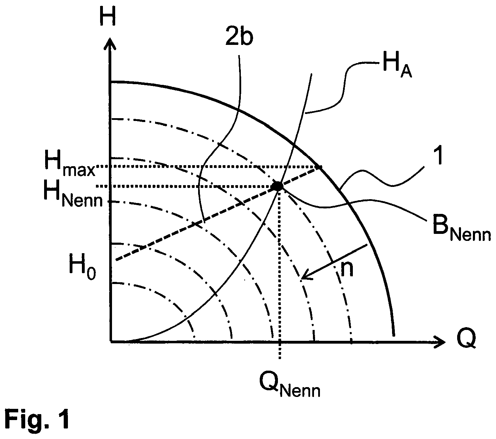

Die Regelkurven werden regelmäßig in Katalogangaben des Pumpenherstellers als Geraden im H-Q-Kennfeld dargestellt. Sie werden nach oben bzw. rechts durch die maximale Pumpenkurve begrenzt, die die HQ-Betriebspunkte maximaler Drehzahl des Pumpenaggregats miteinander verbindet. Der sich bei dem Pumpenaggregat einstellende Betriebspunkt liegt im ungeregelten Betrieb im Schnittpunkt von Anlagenkurve $H_A$ und maximaler Pumpenkurve, im geregelten Betrieb im Schnittpunkt von Anlagenkurve $H_A$ und Regelkurve, wobei dieser unter Umständen auch auf der Maximalkurve liegen kann. Dies ist in Figur 1 anhand einer Proportionaldruckkurve 2b ($\Delta$p-v) dargestellt. Um diese im Falle einer stufenlos vorgebbaren Regelkurve einzustellen, wird ein Einstellwert $H_{max}$ benötigt. Dieser spezifiziert regelmäßig den Schnittpunkt der entsprechenden Regelkurve 2b mit der Maximalkurve 1. Der Einstellwert für die Regelkurve entspricht also üblicherweise derjenigen Förderhöhe $H_{max}$, die am Schnittpunkt der Regelkurve 2b mit der maximalen Pumpenkurve 1 liegt, vgl. hierzu Fig. 1. Dies stellt den Pumpeninstallateur jedoch regelmäßig vor eine Herausforderung, weil ihm nur der Nennpunkt $B_{Nenn}$ der Anlage z.B. aus den Auslegungsdaten bekannt ist. Dies wird nachfolgend verdeutlicht.

Bei der Auslegung einer Heizungsanlage in der Planungsphase wird der Auslegungsvolumenstrom $Q_{Nenn}$ aus der Heizlastberechnung und der Heizflächenauslegung, sowie die Auslegungsförderhöhe $H_{Nenn}$ aus der Rohrnetzberechnung und der Stellventilauslegung bestimmt. Für diesen Auslegungspunkt oder Nennpunkt $B_{Nenn}$ ($Q_{Nenn}$, $H_{Nenn}$) der Anlage ist dann eine passende Pumpe auszuwählen. Idealerweise sollte die maximale Pumpenkurve (Maxkennlinie) dicht am Nennpunkt verlaufen. Dem stehen aber die relativ grobe Abstufung der verfügbaren Pumpengrößen und die Unsicherheit bei der Auslegung entgegen. Es wird deshalb meist ein zu groß dimensioniertes Pumpenaggregat gewählt, so dass die Maximalkennlinie der gewählten Pumpe in der Regel deutlich über dem Nennpunkt der Anlage liegt. Um den vorgesehenen Betrieb im Nennpunkt überhaupt zu erreichen, muss eine Regelkurve eingestellt werden, die durch den Nennpunkt geht oder zumindest dicht an diesem vorbeiläuft. Die Regelkurve trifft die Maxkennlinie aber bei einer Förderhöhe $H_{max}$, die größer als die Nennförderhöhe $H_{Nenn}$ ist. Somit kann nicht einfach die dem Installateur bekannte Nennförderhöhe als Sollwert für die Regelkurve eingestellt werden. Dies wird aber in der Praxis häufig gemacht, sei es, weil der einstellenden Person die Zusammenhänge nicht klar sind oder es schlichtweg so einfacher ist, weil ihm die Ermittlung des korrekten Wertes für $H_{max'}$, um $H_{Nenn}$ zu erreichen, zu umständlich ist. Dies führt jedoch dazu, dass die eingestellte Regelkurve gegenüber der "optimalen" Regelkurve, die durch den Nennpunkt verläuft, tiefer bzw. zu tief verläuft, so dass es in bestimmten Situationen gegebenenfalls zu einer Unterversorgung der Anlage kommt.

Der Einstellwert, mit dem die "richtige" Regelkurve ausgewählt wird, entspricht vielmehr der höheren Förderhöhe $H_{max}$ und nicht der Nennförderhöhe $H_{Nenn}$. Um denjenigen Regelkurveneinstellwert zu ermitteln, der notwendig ist, damit die Regelkurve durch den Nennpunkt verläuft, kann man den Nennpunkt im Pumpenkennfeld, welches auch die Regelkurven umfasst, eintragen und der benachbarten Regelkurve bis zur Maxkennlinie folgen und dann etwas mehr oder etwas weniger als die sich in dem Schnittpunkt dieser Regelkurve mit der Maxkennlinie ergebende Förderhöhe als Einstellwert verwenden.

Mit Hilfe des Auslegungspunktes der Anlage, oder Nennpunkt des Systems, ist eine halbwegs genaue Einstellung des Pumpenaggregats also nur dann möglich, wenn das Kennfeld der Pumpe betrachtet wird. Wird im Austauschfalle eine alte Pumpe durch eine neue Pumpe ersetzt, so muss ein neuer Einstellwert ermittelt werden. Liegt die neue Maxkennlinie niedriger als die der alten Pumpe, so wird der Einstellwert kleiner, da der Schnittpunkt nun dichter am Nennpunkt liegt. Es sind also nicht nur Anlagendaten sondern auch Pumpendaten erforderlich, um die richtige bzw. optimale Regelkurve einzustellen.

Im Falle einer Proportionaldruckkurve ist zudem zu beachten, dass die Nullförderhöhe $H_0$ einer eingestellten Regelkurve in der Regel von der Förderhöhe am Schnittpunkt der Regelkurve mit der Maxkennlinie abhängt, d.h. also vom Einstellwert und nicht vom Nennpunkt. Sehr häufig steigt bei den Pumpenherstellern die Förderhöhe einer $\Delta$p-v Regelkurve von der Nullförderhöhe $H_0$ bei Q = 0 bis zum Schnittpunkt mit der maximale Pumpenkurve um den Faktor zwei, so dass die Nullförderhöhe folglich der Hälfte der Förderhöhe $H_{max}$ am Schnittpunkt der Regelkurve mit der Maxkennlinie, also der Hälfte der eingestellten Förderhöhe entspricht. Mit der erforderlichen Neubestimmung des Einstellwerts bei dem dargestellten Pumpenaustausch ändert sich somit auch die Steigung der Regelkurve. Somit hängt nicht nur der Einstellwert, sondern auch der gesamte Verlauf der Regelkurve von der verwendeten Pumpe ab.

Für die Einstellung einer durch den Anlagennennpunkt verlaufenden Regelkurve ist es somit nach dem Stand der Technik unverzichtbar, das Kennfeld der Pumpe zu berücksichtigen und zeichnerisch den hierfür notwendigen Einstellwert zu ermitteln was selbstredend umständlich und zweitaufwändig ist.

Aus diesem Grund haben Pumpenhersteller Betriebsarten entwickelt, bei denen sich die Pumpenaggregate eine energetisch günstige Regelkurve entweder in Abhängigkeit des hydraulischen Systems selbst auswählen oder gar ohne Regelkurve betrieben werden. Gleichwohl können auch hier die Betriebspunkte über der Zeit betrachtet als Betriebskurve in der Art einer Trajektorie dargestellt werden, weil sich System stetig von einem Systemzustand zum nächsten ändert.

Ungeachtet der beschriebenen Problematik ist es bei Pumpenaggregaten bekannt, eine Begrenzung des Betriebsbereichs vorzunehmen. Beispielsweise ist eine solche Begrenzung auf Volumenströme unterhalb eines vorgegebenen Grenzwerts bekannt, um einerseits Energie zu sparen, andererseits die Anlagengeräusche zu reduzieren. Eine solche Funktion wird beispielsweise in der Umwälzpumpe STRATOS der WILO SE, 44263 Dortmund, DE, unter der Bezeichnung Q-Limit angeboten und ermöglicht eine Einstellung eines Volumenstromgrenzwerts zwischen 25% und 90% des maximalen Durchflusses der Pumpe.

Für den Installateur ist es allerdings ohne Kenntnis der Anlagenkennlinie bzw. des Anlagennennpunkts und ohne Kenntnis des Pumpenkennfeldes nicht möglich, eine sinnvolle Einstellung für diese Funktion zu wählen. Zu niedrig darf der Grenzwert nicht sein, da sonst die Gefahr einer Unterversorgung der Verbraucher vorliegt beispielsweise wenn die Anlage aus einer Nachtabsenkung kommend hochgefahren wird und dabei aufgrund sämtlicher geöffneter Stellenventile eine sehr flache Rohrnetzparabel vorliegt. Der dann bei geringer Förderhöhe vorliegende hohe Volumenstrom würde auf den Grenzwert zu stark begrenzt und das Aufheizen der Verbraucher dauert erheblich länger.

Da ferner der maximale Durchfluss auf einer eingestellten Regelkurve ohnehin kleiner als der maximale Durchfluss der jeweiligen Pumpe gemäß der Maximalkurve ist, in der Regel zwischen 75% und 90% beträgt, stellt sich dem Installateur die Frage, wie weit er mit dem Grenzwert runter gehen muss, damit die Bereichsbegrenzung überhaupt eine Wirkung entfaltet. Dem Installateur ist somit ein sinnvoller Einstellbereich des Grenzwerts nicht ohne Kenntnis der Anlage und der Pumpe ersichtlich.

Aus der Patentanmeldung US 2005/0252205 A1 ist ein Verfahren zum Steuern des Betriebs einer Zentrifugalpumpe bekannt, bei dem über eine Eingabevorrichtung einer Steuerung des Motors eine Leistung und eine Drehzahl, insbesondere des sogenannten Best Efficiency Points (BEP), sowie ein Leistungs-Offset vorgegeben wird. Es erfolgt dann eine Anpassung des Betriebs der Pumpe und/oder ein Ausgeben eines Warnhinweises für einen unerwünschten Betriebszustand an einen Anwender der Pumpe, und zwar auf Basis eines Vergleichs eines aktuellen Ist-Drehmomentwertes mit einem aus den vorgegebenen Werten berechneten BEP-Drehmomentwerts, wobei dieser auf Basis einer Leistungs-Offset Korrektur kompensiert wird.

Es ist Aufgabe der vorliegenden Erfindung, ein Verfahren und ein Pumpenaggregat bereitzustellen, das dem Installateur eine einfache Einstellung eines energieoptimierten Betriebs des Pumpenaggregats ermöglicht, wobei diese einfache Einstellbarkeit für eine Vielzahl verschiedener Betriebszwecke respektive für eine Vielzahl verschiedener zweckorientierter Betriebsarten, insbesondere Regelarten, gegeben sein soll, so dass das Einsatzspektrum eines erfindungsgemäßen Kreiselpumpenaggregats auf eine Vielzahl verschiedener Einsatzmöglichkeiten vergrößert wird.

Diese Aufgabe wird gelöst durch ein Verfahren mit den Merkmalen des Anspruchs 1, durch ein Pumpenaggregat mit den Merkmalen des Anspruchs 14 sowie durch ein Computerprogrammprodukt mit den Merkmalen des Anspruch 16. Vorteilhafte Weiterbildungen sind in den jeweiligen Unteransprüchen angegeben oder werden nachfolgend beschrieben.

Erfindungsgemäß wird ein Verfahren zur Betriebseinstellung eines elektronisch gesteuerten oder geregelten Kreiselpumpenaggregats in einem hydraulischen System vorgeschlagen, insbesondere bei einer Erstinbetriebnahme, bei dem eine direkte und voneinander getrennte Eingabe von zumindest zwei einen Betriebspunkt definierenden Vorgabewerten erfolgt, umfassend einen ersten Vorgabewert für eine erste physikalische Größe und einen zweiten Vorgabewert für eine zweite physikalische Größe, wobei anschließend aus den Vorgabewerten eine Betriebskurve und/ oder eine Betriebsbereichsbegrenzung für die Regelung oder Steuerung des Kreiselpumpenaggregats ermittelt und eingestellt wird.

Ferner wird erfindungsgemäß ein Kreiselpumpenaggregat mit einer Pumpeneinheit, einem diese antreibenden Elektromotor und einer Pumpenelektronik zu ihrer Steuerung oder Regelung vorgeschlagen, bei dem zumindest zwei einen Betriebspunkt definierende Vorgabewerte umfassend einen ersten Vorgabewert für eine erste physikalische Größe und einen zweiten Vorgabewert für eine zweite physikalische Größe direkt und voneinander getrennt an der Pumpenelektronik einstellbar sind und die Pumpenelektronik eingerichtet ist, aus den Vorgabewerten anschließend eine Betriebskurve und/ oder eine Betriebsbereichsbegrenzung für die Regelung oder Steuerung des Kreiselpumpenaggregats zu ermitteln und einzustellen.

Schließlich wird erfindungsgemäß noch ein Computerprogrammprodukt umfassend ein auf einer Recheneinheit, insbesondere in der Pumpenelektronik, ablauffähiges Programm mit Instruktionen zur Durchführung des erfindungsgemäßen Verfahrens vorgeschlagen, wenn es auf der Recheneinheit ausgeführt wird. Das Programm ist entsprechend zur Ausführung des erfindungsgemäßen Verfahrens eingerichtet. Bei der Recheneinheit kann es sich beispielsweise um einen Mikrocontroller der Pumpenelektronik des Pumpenaggregats handeln.

Ein Kernaspekt der Erfindung liegt darin, ein Pumpenaggregat bereitzustellen, an dem ein grundsätzlich beliebiger Betriebspunkt des Pumpenaggregats eingestellt werden kann. Das Verfahren ist entsprechend auf die Einstellung dieses Betriebspunktes durch Vorgabe entsprechender Einstellwerte gerichtet. Bevorzugt kann diese Einstellung bei der Installation des Pumpenaggregats vorgenommen werden. Sie kann aber auch jederzeit nach der Installation geändert, also erneut oder erstmals vorgenommen werden. Das Pumpenaggregat verwendet die Betriebspunktvorgabe entweder zur selbsttätigen Parametrierung seiner Betriebsart oder zur selbsttätigen Parametrierung einer Begrenzung seines Betriebsbereichs, oder gemäß einer dritten Variante sowohl zur Betriebsartparametrierung als auch zur Betriebsbereichsbegrenzung. Dadurch, dass der Installateur lediglich die beiden Vorgabewerte eingeben muss, ist die Betriebseinstellung des Pumpenaggregats besonders einfach und wenig fehleranfällig.

Als Betriebspunkt wird im Sinne der Erfindung ein beliebiger Arbeitspunkt innerhalb des zulässigen Betriebsbereichs des Pumpenaggregats im hydraulischen System verstanden. Somit ist der vorgegebene Betriebspunkt einer von vielen möglichen Betriebspunkten, der auf einer aktuell eingestellten Betriebskurve oder fernab einer solchen liegen kann.

Unter dem Begriff Betriebsart ist erfindungsgemäß jegliche Art zu verstehen, in der das Pumpenaggregat betrieben werden kann. Hierunter fällt zum einen ein geregelter, zum anderen ein rein gesteuerter Betrieb. Ein gesteuerter Betrieb liegt beispielsweise dann vor, wenn das Pumpenaggregat mit einer konstanten Drehzahl betrieben wird.

Ein geregelter Betrieb ist in diesem Sinn einerseits eine Kennlinienregelung, bei der der Betriebspunkt des Pumpenaggregats auf einer definierten Regelkurve gehalten, das Pumpenaggregat folglich entlang dieser Regelkurve betrieben wird. Kennlinienregelungen dieser Art sind beispielsweise die klassischen Regelarten $\Delta pc$, bei der die Regelkurve eine Konstantdruckkurve ist, $\Delta p$-v, bei der die Regelkurve eine Proportionaldruckkurve oder parabelförmige Kurve ist, und $\Delta p$-T, bei der der Differenzdruck bzw. die Förderhöhe in Abhängigkeit einer Temperatur, beispielsweise der Rücklauftemperatur einer Heizungsanlage eingestellt wird. Letzteres wird bei Brennwertanlagen verwendet.

Ein geregelter Betrieb ist andererseits auch ein solcher, bei dem der Differenzdruck des Pumpenaggregats losgelöst von einer fixen Regelkurve dynamisch mit dem Volumenstromtrend der Anlage mitgeführt wird, wie dies in den deutschen Patentanmeldungen DE 102011012211 A1 und DE 102014018020.4 beschrieben ist und als "Dynamic Adapt" bezeichnet wird. Es sei an dieser Stelle angemerkt, dass der Differenzdruck $\Delta p$ proportional zur Förderhöhe H des Pumpenaggregats ist, so dass unter Differenzdruck auch stets die Förderhöhe zu verstehen ist.

Bei der Betriebskurve handelt es sich entweder um eine Regelkurve (geregelter Betrieb) oder eine Pumpenkurve (gesteuerter Betrieb). Eine Regelkurve definiert den funktionalen Zusammenhang zwischen der ersten physikalischen Größe und der zweiten physikalischen Größe in Gestalt einer Kennlinie, entlang der das Pumpenaggregat geregelt wird. Eine Pumpenkurve ist demgegenüber eine Linie im Kennfeld des Pumpenaggregats, die alle Betriebspunkte gleicher Drehzahl miteinander verbindet. Entlang einer Pumpenkurve ist die Drehzahl folglich konstant.

Vorzugsweise ist das Kreiselpumpenaggregat eingerichtet, in einer Vielzahl verschiedener Betriebsarten betrieben zu werden, zwischen denen bei der Inbetriebnahme oder auch während des Betriebs gewählt bzw. umgeschaltet werden kann.

Um die zuvor genannten Regelungsarten zu realisieren, ist das Kreiselpumpenaggregat geeigneterweise in seinem Differenzdruck geregelt, d.h. der Differenz zwischen der Saug- und der Druckseite. In anderen Regelungsarten kann aber auch auf eine andere physikalische Größe, beispielsweise auf eine Temperatur wie der Temperatur des Fördermediums geregelt werden.

Zur Einstellung einer beliebigen Drehzahl kann der Elektromotor in herkömmlicher Weise von einem Frequenzumrichter elektrisch gespeist werden. Dies ist im Stand der Technik hinreichend bekannt. Angesteuert wird der Frequenzumrichter dann von der Pumpenelektronik, die entsprechende Stellgrößen zur Ansteuerung der Halbleiterschalter des Frequenzumrichters ausgibt.

Die Pumpenelektronik kann gemäß den heute üblichen elektronisch geregelten Kreiselpumpen zumindest einen Mikroprozessor, Speichermittel für die Firmware sowie zur Speicherung der Regelungs- und/ oder Steuerungssoftware, sowie ebenfalls Anzeige- und Bedienmittelt aufweisen. Je nach Funktionsumfang des Pumpenaggregats kann die Pumpenelektronik weitere Funktionseinheiten umfassen. Ferner kann auch der Frequenzumrichter Teil der Pumpenelektronik sein, d.h. baulich mit dieser eine Einheit bilden.

Bei dem hydraulischen System kann es sich beispielsweise um ein geschlossenes System, insbesondere ein Kreislaufsystem, handeln, wie es üblicherweise bei Heizungssystemen, Kühlanlagen, solarthermischen Anlagen, aber auch bei der Trinkwasserversorgung für die Warmwasserzirkulation vorkommt. Dabei wird das Fördermedium im Kreis gefördert, d.h. von einer zentralen Einheit zu den Verbrauchern und von diesen wieder zurück zur zentralen Einheit. Das hydraulische System kann alternativ aber auch ein offenes System, beispielsweise ein Abwasser förderndes System oder eine Trinkwasserinstallation sein, bei denen es an einem Kreislauf fehlt. Bei der Trinkwasserinstallation kann das Kreiselpumpenaggregat eine Boosterpumpe, d.h. Teil einer Druckerhöhungsanlage sein.

Erfindungsgemäß erfolgt die Eingabe der Vorgabewerte direkt und voneinander getrennt. Dies bedeutet zum einen, dass die Einstellung nicht über einen Hilfswert erfolgen muss, der gegebenenfalls aufwändig rechnerisch oder zeichnerisch ermittelt wird. Zum anderen bedeutet dies, dass die Vorgabewerte unabhängig voneinander eingestellt werden können, sich also nicht einander bedingen, jedenfalls soweit dies technisch möglich ist, wie nachfolgend bezüglich einer optionalen Einstellwertbegrenzung deutlich wird.

Die Eingabe der Vorgabewerte kann bevorzugt direkt an der Pumpenelektronik erfolgen. Diese kann baulich Teil des Kreiselpumpenaggregats sein, so dass die Eingabe direkt vor Ort am Pumpenaggregat erfolgen kann. Alternativ kann die Pumpenelektronik auch fernab der Pumpeneinheit bzw. von deren Elektromotor entfernt, beispielsweise in einer Steuerzentrale angeordnet sein.

Unabhängig von ihrer räumlichen Anordnung kann die Pumpenelektronik zusätzlich oder alternativ eine Schnittstelle aufweisen, über die sie mit einem Netzwerk verbunden werden bzw. verbunden sein kann und über die die erfindungsgemäße Betriebseinstellung von einer entfernten Stelle, beispielsweise einer Gebäudeleittechnik, insbesondere mittels eines Computers, vorzugsweise über das Internet vorgenommen werden kann.

Die Pumpenelektronik kann gemäß einer weiteren Ausführungsvariante kumulativ oder alternativ zu den vorgenannten Varianten eine Schnittstelle für eine Nahefeldverbindung aufweisen, um ein mobiles Endgerät für die Vornahme der Betriebseinstellung mit der Pumpenelektronik zu verbinden. Diese Schnittstelle kann beispielsweise eine USB-Schnittstelle oder eine Funkschnittstelle sein. Die Funkschnittstelle kann beispielsweise auf WLAN, Bluetooth, ZigBee oder EnOcean basieren. Das mobile Endgerät kann beispielsweise ein Laptop, ein Smartphone oder ein Tablet-Computer sein.

Die Art und Weise der Eingabe der Vorgabewerte kann ebenfalls beliebig sein, beispielsweise mittels eines Eingabeelements wie eines Drehknopfes, Drückknopfes, Tasters, Schiebers oder dergleichen. Gemäß einer vorteilhaften Ausführungsvariante kann die Pumpenelektronik oder ein zu Eingabe der Vorgabewerte verwendeter Computer ein berührungssensitves Display aufweisen, über das die Eingabe erfolgen kann, wie nachfolgend noch verdeutlicht wird.

Bei der ersten und zweiten physikalischen Größe kann es sich um Größen des Kreiselpumpenaggregats handeln. Vorzugsweise ist die erste physikalische Größe die Förderhöhe $H$ oder der hierzu proportionale Differenzdruck $\Delta p$ des Pumpenaggregats. Alternativ kann auch der Absolutdruck auf der Saug- oder der Druckseite des Kreiselpumpenaggregats erste physikalische Größe sein. Die zweite physikalische Größe kann der Förderstrom $Q$ des Kreiselpumpenaggregats sein. Bei dieser Kombination bilden der erste und zweite Vorgabewert ein Wertepaar, das den Betriebspunkt im HQ-Diagramm, d.h. in der typischen Kennfelddarstellung des Pumpenaggregats beschreibt.

Bei der zweiten physikalischen Größe kann es sich alternativ zum Förderstrom $Q$ um eine Temperatur handeln. Beispielsweise kann es sich um eine absolute Temperatur des geförderten Mediums, wie z.B. eine Vorlauftemperatur oder eine Rücklauftemperatur, oder eine Temperaturdifferenz, insbesondere zwischen einer Vor- und einer Rücklauftemperatur handeln. In der Paarung "Differenzdruck" als erste physikalische Größe und "Rücklauftemperatur" oder "Temperaturdifferenz", letztere auch Spreizung genannt, kann das Kreiselpumpenaggregat als Förderpumpe in einer Heizungsanlage mit einem Kessel in Brennwerttechnik eingesetzt werden.

Gemäß einer anderen Ausführungsvariante kann die erste physikalische Größe die elektrische Leistung P, das Drehmoment Md oder der Wirkungsgrad $\eta$ des Pumpenaggregats sein. Die zweite physikalische Größe kann dann der Förderstrom Q des Pumpenaggregats sein, so dass der einzustellende Betriebspunkt ein Punkt im P(Q)-Diagramm, im Md(Q) oder $\eta$(Q)-Diagramm darstellt. Alternativ kann die zweite physikalische Größe die Drehzahl n des Pumpenaggregats sein, so dass der einzustellende Betriebspunkt ein Punkt im P(n)-Diagramm, im Md(n) oder $\eta$(n)-Diagramm darstellt.

Besonders bevorzugt handelt es sich bei dem erfindungsgemäß vorzugebenden Betriebspunkt um den Auslegungspunkt des hydraulischen Systems. Der erste und zweite Vorgabewert bilden dann jeweils einen Nennwert dieses Auslegungspunktes, so dass in diesem Fall bei dem Betriebspunkt auch von dem Nennpunkt gesprochen werden kann. Dieser kann in Gestalt einer Differenzdruck- oder Förderhöhenangabe H und einer Volumenstromangabe Q ausgedrückt werden. Er kann zudem im HQ-Diagramm, d.h. im Pumpenkennfeld dargestellt werden, siehe Figur 1, Punkt $B_{Nenn}(H_{Nenn}, Q_{Nenn})$. Ein Installateur sollte diesen Auslegungspunk des Systems kennen, in das er das Pumpenaggregat einzubauen beabsichtigt, da er nach dem Auslegungspunkt die Größe bzw. Leistung des Pumpenaggregats ohnehin festlegen muss. Der Auslegungspunkt kann zum einen den Planungsunterlagen des hydraulischen Systems entnommen werden. Zum anderen kann der Auslegungspunkt gegebenenfalls am System selbst, beispielsweise handschriftlich notiert sein.

Durch die Anwendung des erfindungsgemäßen Verfahrens und Verwendung des erfindungsgemäßen Kreiselpumpenaggregats braucht der Installateur schließlich nur noch diesen Auslegungspunkt zu kennen, um das Pumpenaggregat korrekt einzustellen. Er muss folglich nicht mehr das Pumpenkennfeld berücksichtigen, um eine optimale Einstellung der Pumpe zu erreichen. Ferner erübrigen sich umständliche und zeitraubende Berechnungen oder Überlegungen anhand des Pumpenkennfeldes und der Anlagenkennlinie.

Gemäß einer Ausführungsvariante der Erfindung wird die Eingabe der Vorgabewerte verwendet, um die Betriebskurve zu ermitteln und einzustellen. Gemäß einer anderen Ausführungsvariante der Erfindung wird die Eingabe der Vorgabewerte verwendet, um die Betriebsbereichsbegrenzung zu ermitteln und einzustellen.

Gemäß einer dritten Variante werden die Vorgabewerte verwendet, um eine Betriebskurve einerseits zu ermitteln und einzustellen, die andererseits kombiniert ist mit einer Betriebsbereichsbegrenzung. Vor oder nach der Eingabe der Vorgabewerte kann durch die Pumpenelektronik abgefragt bzw. an dieser festgelegt werden, ob die eingegebenen Vorgabewerte für die Ermittlung einer Betriebskurve, eines Betriebsbereichs oder für beides verwendet werden sollen. Dabei kann jedoch die Betriebseinstellung "Betriebskurve" als Standardeinstellung verwendet werden, so dass keine gesonderte Abfrage bzw. Einstellung erforderlich ist. Die Vorgabewerte werden dann standardmäßig zur Ermittlung und Einstellung einer Betriebskurve verwendet.

Die Betriebskurve kann beispielsweise aus einem hinterlegten mathematischen Zusammenhang zwischen der ersten und der zweiten physikalischen Größe ermittelt werden, wobei der erste und der zweite Vorgabewerte einen Punkt auf der Betriebskurve bilden. Durch diesen mathematischen Zusammenhang, der in der Pumpenelektronik hinterlegt sein und/ oder von dieser ermittelt werden kann, sind die Vorgabewerte miteinander verknüpft. Sie bilden vor der Eingabe jedoch zunächst unbestimmte Variablen, so dass der mathematische Zusammenhang eine ganze Kurvenschar beschreibt. Erst durch die Eingabe der Vorgabewerte erhalten diese Variablen numerische Werte, wodurch der mathematische Zusammenhang auf eine bestimmte Betriebskurve festgelegt wird bzw. ist.

Die Betriebskurve kann eine Regelkurve oder eine Pumpenkurve sein. Somit ist vor der erfindungsgemäßen Betriebseinstellung diese Regelkurve oder Pumpenkurve unbestimmt und wird erst durch die Einstellung der Vorgabewerte hinsichtlich ihrer Lage und ihres Verlaufs fixiert. Durch Einsetzen der Vorgabewerte in den mathematischen Zusammenhang wird folglich die Betriebskurve aus der Schar an Kurven ermittelt und dann für die Regelung oder Steuerung des Pumpenaggregats eingestellt. Dies kann durch die Pumpenelektronik erfolgen.

Im Falle einer Konstantdruckkurve ($\Delta$p-c) als Regelkurve ist der mathematische Zusammenhang zwischen der Förderhöhe H als erste physikalische Größe und dem Förderstrom Q als zweite physikalische Größe mit dem vorgegebenen Betriebspunkt auf der Regelkurve durch eine Konstante gegeben, die dem ersten Vorgabewert entspricht:

$$H_1(Q) = H_{set},$$

wobei $H_{set}$ den ersten Vorgabewert bildet, und $H_1(Q)$ den mathematischen Zusammenhang beschreibt. Entspricht der erste Vorgabewert $H_{set}$ der Nennförderhöhe, verläuft die Konstantdruckkurve vorteilhafterweise genau durch den Anlagennennpunkt. Eine Berücksichtigung des zweiten Vorgabewerts ist hierbei nicht erforderlich.

Im Falle einer Proportionaldruckkurve ($\Delta$p-v) als Regelkurve ist der mathematische Zusammenhang zwischen der Förderhöhe H als erste physikalische Größe und dem Förderstrom Q als zweite physikalische Größe mit dem vorgegebenen Betriebspunkt auf der Regelkurve durch eine lineare Abhängigkeit gegeben:

$$H_2(Q) = \frac{H_{set} - a \cdot H_0}{Q_{set}} Q + a \cdot H_0,$$

gegeben, wobei $H_{set}$ den ersten Vorgabewert, $Q_{set}$ den zweiten Vorgabewert, $H_0$ die Nullförderhöhe (Förderhöhe bei Volumenstrom null) und $a$ eine festlegbare Konstante ist. $H_2(Q)$ beschreibt wieder den mathematischen Zusammenhang. Entsprechen der erste und zweite Vorgabewert der Nennförderhöhe und dem Nennvolumenstrom, verläuft die Proportionaldruckkurve wunschgemäß durch den Anlagennennpunkt $B_{Nenn}$.

Die Nullförderhöhe kann in Abweichung vom üblichen Stand der Technik die Hälfte des ersten Vorgabewerts $H_{set}$ betragen. Sie kann auf diesen Wert standardmäßig voreingestellt sein, so dass die Nullförderhöhe nicht explizit vorgegeben werden braucht. Gleichwohl kann die Nullförderhöhe in einer Ausführungsvariante einen dritten Vorgabewert bilden, der nach dem ersten und dem zweiten Vorgabewert ebenfalls eingegeben werden kann. Im Falle $a = 1$ ist die Steigung der Proportionaldruckkurve allein durch $H_0$ bestimmt, da die Vorgabewerte $H_{set}$ und $Q_{set}$ den vorgegebenen Betriebspunkt definieren und dieser auf der Betriebskurve liegen soll. Insoweit sind der erste und zweite Vorgabewert für die Einstellung der Steigung der Betriebskurve nicht frei wählbar. Der Koeffizient $a$ erlaubt ebenfalls eine Anpassung der Steigung, insbesondere bei festgelegter Nullförderhöhe. Er ist jedoch nur optional und kann daher bevorzugt standardmäßig auf den Wert 1 voreingestellt sein. In diesem Fall ergibt sich für den mathematischen Zusammenhang vereinfacht dargestellt:

$$H_2(Q) = \frac{1}{2} H_{set} \left( \frac{Q}{Q_{set}} + 1 \right)$$

Analog zu den vorhergehenden Ausführungen kann für eine parabelförmige Druckkurve ($\Delta$p-v) als Regelkurve ein mathematischer Zusammenhang mit einer quadratischen Abhängigkeit der ersten physikalischen Größe von der zweiten physikalischen Größe gemäß:

$$H_3(Q) = \frac{H_{set} - b \cdot H_0}{Q_{set}^2} Q^2 + b \cdot H_0.$$

verwendet werden, wobei $H_{set}$ den ersten Vorgabewert, $Q_{set}$ den zweiten Vorgabewert, $H_0$ die Nullförderhöhe (Förderhöhe bei Volumenstrom null) und $b$ ein festlegbarer Koeffizient ist. $H_3(Q)$ beschreibt wieder den mathematischen Zusammenhang. Entsprechen der erste und zweite Vorgabewert der Nennförderhöhe und dem Nennvolumenstrom, verläuft die quadratische Druckkurve wunschgemäß durch den Anlagennennpunkt $B_{Nenn}$.

Wie zuvor kann die Nullförderhöhe die Hälfte des ersten Vorgabewerts $H_{set}$ betragen. Hierdurch ist im Wesentlichen die Steigung der quadratischen Druckkurve festgelegt. Der Koeffizient $b$ erlaubt eine Anpassung der Steigung. Er ist jedoch nur optional und kann daher bevorzugt standardmäßig auf den Wert 1 voreingestellt sein. Somit ergibt sich für den mathematischen Zusammenhang vereinfacht dargestellt:

$$H_3(Q) = \frac{1}{2} H_{set} \left( \frac{Q^2}{Q_{set}^2} + 1 \right)$$

Die dargestellten mathematischen Zusammenhänge können beispielsweise in der Pumpenelektronik hinterlegt sein.

Gemäß einer anderen Ausführungsvariante kann die Betriebskurve eine Pumpenkurve sein. In diesem Fall ist der mathematische Zusammenhang zwischen der Förderhöhe H als erste physikalische Größe und dem Förderstrom Q als zweite physikalische Größe durch eine quadratische Abhängigkeit beispielsweise wie folgt gegeben:

$$H_P(Q, n) = \left(\frac{n}{n_{max}}\right)^2 \cdot a_0 + \frac{n}{n_{max}} \cdot a_1 \cdot Q + a_2 \cdot Q^2$$

gegeben, wobei $n_{max}$ die vom Hersteller vorgegebene maximale Drehzahl des Pumpenaggregats ist, die bei der Maximalkurve vorliegt, n eine beliebige Drehzahl kleiner als die Maximaldrehzahl ist, und $a_0$, $a_1$ und $a_2$ Koeffizienten sind, die das Kennfeld eines Pumpenaggregats beschreiben. Die Koeffizienten können seitens des Herstellers des Pumpenaggregats vorgegeben oder durch Approximation einer vom Hersteller zu dem Pumpenaggregat vorgegebenen Pumpenkurve ermittelt werden.

Die gegebene mathematische Beschreibung der Pumpenkurve $H_P(Q, n)$ gilt für jede Drehzahl, d.h. sie bildet eine Kurvenschar. Soll nun aus dieser Kurvenschar diejenige Pumpenkurve ermittelt werden, die durch den vorgegebenen Betriebspunkt verläuft, ist diejenige Drehzahl $n_{set}$ zu ermitteln, die für den Erhalt genau dieser Pumpenkurve einzustellen ist. Diese Drehzahl $n_{set}$ ergibt sich aus:

$$n_{set} = -\frac{n_{max}}{2a_0} \cdot a_1 Q_{set} + \frac{n_{max}}{a_0} \sqrt{\frac{a_1}{4} Q_{set} - a_2 Q_{set}^2 + H_{set}}$$

Durch Einsetzen des ersten und zweiten Vorgabewerts in diesen mathematischen Zusammenhang wird die für einen Verlauf durch den vorgegebenen Betriebspunkt einzustellende Drehzahl ermittelt, womit gleichzeitig auch die Pumpenkurve festgelegt ist. Die Einstellung der Pumpenkurve erfolgt durch Einstellung der ermittelten Drehzahl $n_{set}$.

Wie bereits erwähnt, kann der die Betriebskurve beschreibende mathematische Zusammenhang in der Pumpenelektronik hinterlegt sein. Insbesondere können mehrere Betriebskurven in Gestalt mathematischer Zusammenhänge, vorzugsweise alle der vorgenannten mathematischen Zusammenhänge in der Pumpenelektronik hinterlegt sein, so dass das Pumpenaggregat für verschiedene Einsatzzwecke verwendet werden und in Abhängigkeit des jeweiligen Einsatzzwecks eine bestimmte Betriebskurve ausgewählt werden kann. Dies kann durch manuelle Vorgabe oder automatisch aufgrund bestimmter an der Pumpenelektronik vorgegebener Informationen erfolgen, wie beispielsweise "Fußbodenheizung? ja/nein". Falls hier "ja" gewählt wird, kann automatisch beispielsweise die Konstantdruckkurve, bei "nein" beispielsweise die Proportionaldruckkurve mit den Vorgabewerten verwendet werden, um nur ein Beispiel zu nennen. Alternativ kann jedoch auch eine bestimmte Betriebskurve beispielsweise eine Proportionaldruckkurve standardmäßig verwendet werden, so dass keine gesonderte manuelle Vorgabe der Betriebskurve oder anderer Informationen erforderlich ist.

Gemäß einer anderen Ausführungsvariante kann die Betriebskurve nach der Eingabe der Vorgabewerte aus einer Anzahl in der Pumpenelektronik hinterlegter Kurven nach der Maßgabe ausgewählt werden, welche dieser Kurven den kleinsten Abstand zum vorgegebenen Betriebspunkt aufweist. Dies kann beispielsweise mathematisch mit dem Verfahren der kleinsten Fehlerquadrate ermittelt werden. Die hinterlegten Kurven können in Gestalt jeweils eines mathematischen Zusammenhangs der zuvor beschriebenen Art für jede Kurve oder in Gestalt von Tabellen hinterlegt sein. Wie zuvor beschrieben kann auch hier eine Auswahl der Art der entsprechenden Betriebskurve (Konstantdruckkurve, Proportionaldruckkurve, quadratische Regelkurve, Pumpenkurve) manuell, automatisch oder anhand einer definierten Voreinstellung, beispielsweise der Proportionaldruckkurve erfolgen, so dass anhand der Vorgabewerte nur noch aus der entsprechenden Art der Betriebskurve diejenige Kurven ermittelt werden muss, die den kleinsten Abstand zum vorgegebenen Betriebspunkt besitzt.

Für die Ausführungsvariante oder -varianten, bei der eine Betriebsbereichsbegrenzung erfolgt, kann zumindest eine Grenzkurve aus einem hinterlegten mathematischen Zusammenhang zwischen der ersten und zweiten physikalischen Größe ermittelt und verwendet werden, wobei die Vorgabewerte einen Punkt auf der Grenzkurve bilden. In einem einfachen Fall kann für die Betriebsbereichsbegrenzung allerdings der erste Vorgabewert als Maximalwert der ersten physikalischen Größe und/ oder der zweite Vorgabewert als Maximalwert der zweiten physikalischen Größe verwendet werden. Hierdurch werden ebenfalls Grenzkurven definiert. Die Grenzkurve bildet für den Betrieb des Pumpenaggregats eine Schranke, die die Betriebspunkte nicht überschreiten dürfen.

Eine Grenzkurve kann beispielsweise durch einen Maximalwert für die erste physikalische Größe gebildet sein. Ist die erste physikalische Größe beispielsweise die Förderhöhe des Pumpenaggregats, kann der Maximalwert durch den ersten Vorgabewert gebildet sein, $H_{lim} = H_{set}$, so dass im Betrieb des Pumpenaggregats keine Förderhöhe über der vorgegebenen Förderhöhe zulässig ist. Im Ergebnis wirkt diese Grenzkurve wie eine Konstantdruckkurve, jedoch wird nicht entlang ihr geregelt, sondern nur eine Förderhöhe größer als der Maximalwert auf diesen Maximalwert beschränkt.

Eine andere Grenzkurve kann beispielsweise durch einen Maximalwert der zweiten physikalischen Größe gebildet sein. Ist die zweite physikalische Größe beispielsweise der Förderstrom des Pumpenaggregats, kann der Maximalwert durch den zweiten Vorgabewert gebildet sein, $Q_{lim} = Q_{set}$, so dass im Betrieb des Pumpenaggregats kein Förderstrom über dem vorgegebenen Förderstrom zulässig ist. Ein Förderstrom größer als der Maximalwert auf diesen Maximalwert beschränkt. Hiermit wird die in der Beschreibungseinleitung genannte Funktion Q-Limit implementiert.

Eine wiederum andere Grenzkurve kann beispielsweise durch eine Pumpenkurve gebildet sein, auf der der vorgegebene Betriebspunkt liegt. Entsprechend kann die Grenzkurve durch den zuvor angegebenen mathematischen Zusammenhang $H_P(Q, n)$ unter Verwendung der eingegebenen Vorgabewerte in dieser Pumpenkurve beschrieben sein. Obgleich diese Grenzkurve im HQ-Diagramm durch eine entsprechende Pumpenkurve dargestellt werden kann, muss im Sinne des erfindungsgemäßen Verfahrens kein Vergleich mit dieser Pumpenkurve erfolgen, um die Betriebsbereichsbegrenzung durchzuführen. Vielmehr kann gemäß der obenstehenden Gleichung für $n_{set}$ eine Grenzdrehzahl $n_{lim}$ unter Verwendung der Vorgabewerte ermittelt werden, mit der im Betrieb des Pumpenaggregats ein Vergleich erfolgt.

Vorzugsweise steuert oder regelt die Pumpenelektronik das Kreiselpumpenaggregat derart, dass der aktuelle Betriebspunkt des Kreiselpumpenaggregats stets auf oder unterhalb der Grenzkurve liegt. Bewegt sich der Betriebspunkt des Pumpenaggregats in Richtung einer Förderhöhe größer als die vorgegebene Förderhöhe, erfolgt eine Bereichsbeschränkung auf diese vorgegebene Förderhöhe. Bewegt sich der Betriebspunkt des Pumpenaggregats in Richtung eines Förderstroms größer als der vorgegebene Förderstrom, erfolgt eine Bereichsbeschränkung auf diesen vorgegebenen Förderstrom. Bewegt sich der Betriebspunkt des Pumpenaggregats in Richtung einer Drehzahl größer als die aus den Vorgabewerten ermittelte Grenzdrehzahl, erfolgt eine Bereichsbeschränkung auf diese Grenzdrehzahl.

Gemäß einer bevorzugten Ausführungsvariante kann eine Kombination der Betriebskurve mit einer Betriebsbereichsbegrenzung erfolgen. Vorzugsweise kann das Kreiselpumpenaggregat hierbei für Werte unterhalb des zweiten Vorgabewerts entlang der Betriebskurve und für Werte oberhalb des zweiten Vorgabewerts entlang der Grenzkurve geregelt oder gesteuert werden, insbesondere durch die Pumpenelektronik. So kann das Pumpenaggregat beispielsweise unterhalb eines vorgegebenen Förderstromwerts entlang einer Konstantdruckkurve $H_1(Q) = H_{set}$ geregelt werden deren Förderhöhe durch den ersten Vorgabewert festgelegt ist. Wird die Anlagenkurve zunehmend flacher, so dass der Betriebspunkt auf der Konstantdruckkurve den vorgegebenen Förderstromwert erreicht und diesen überschreiten würde, erfolgt eine Begrenzung auf diesen Förderstromwert und es wird entlang der Grenzkurve $Q_{lim}$ entlang geregelt. Gemäß einem anderen Beispiel kann das Pumpenaggregat unterhalb des vorgegebenen Förderstromwerts entlang einer Proportionaldruckkurve $H_2(Q)$ geregelt oberhalb entlang einer Grenzzahl gesteuert werden. Wird die Anlagenkurve zunehmend flacher, so dass der Betriebspunkt auf der Proportionaldruckkurve den vorgegebenen Förderstromwert erreicht und diesen überschreiten würde, erfolgt eine Begrenzung der Drehzahl auf eine Grenzdrehzahl, wobei dann entlang der zugehörigen Pumpenkurve geregelt wird, auf der der vorgegebene Betriebspunkt liegt. Die Betriebsbereichsbegrenzung erfolgt folglich bei diesen Beispielen geeigneterweise während der Regelung entlang der Regelkurve oder Steuerung entlang der Pumpenkurve.

Bei der Eingabe des zweiten Vorgabewerts kann eine Eingabebeschränkung auf denjenigen Wertebereich erfolgen, den ein Abschnitt einer maximalen Pumpenkurve bei dem momentan eingestellten ersten Vorgabewert abdeckt. Dies bedeutet, dass der zweite Vorgabewert maximal so groß eingestellt werden kann, wie die zweite physikalische Größe im Schnittpunkt des ersten Vorgabewerts mit der Pumpenkurve ist. Soll für den zweiten Vorgabewert ein größerer als dieser Maximalwert eingestellt werden, muss der erste Vorgabewert reduziert werden. Der Schnittpunkt des ersten Vorgabewerts mit der maximalen Pumpenkurve wandert dann zu größeren Förderströmen hin, sodass entsprechend der einstellbare Maximalwert für den zweiten Vorgabewert erhöht wird.

Zur Vereinfachung der Eingabe der Vorgabewerte kann sich das erfindungsgemäße Verfahren verschiedener Visualisierungsfunktionen bedienen. So kann der aktuell eingestellte erste Vorgabewert und/oder der aktuell eingestellte zweite Vorgabewert während ihrer jeweiligen Eingabe beispielsweise in einem Diagramm, beispielsweise einem HQ-Diagramm, auf einem Display. Dieses Display kann Teil der Pumpenelektronik sein oder durch eine separat hierzu vorliegende Anzeige gebildet sein. Die grafische Darstellung kann eine Markierung des durch die aktuell eingestellten Vorgabewerte definierten Betriebspunkts in dem HQ-Diagramm umfassen und/oder numerisch dargestellt werden. Zusätzlich oder alternativ kann bei der grafischen Darstellung eine oder jeweils eine Markierung des aktuell eingestellten ersten, zweiten und/ oder dritten Vorgabewerts an den Achsen des Diagramms angezeigt werden. Ebenfalls zusätzlich oder alternativ kann während der Eingabe des zweiten Vorgabewerts eine Bereichsgrenze für die Eingabebeschränkung im Diagramm dargestellt werden, so dass im Diagramm unmittelbar ersichtlich ist, innerhalb welchem Wertebereich der zweite Vorgabewert eingestellt werden kann.

Wie bereits angesprochen kann gemäß einer Ausführungsvariante ein berührungssentivies Display verwendet werden, um einerseits zumindest eine der genannten Anzeigefunktionen auszuführen, vorzugsweise aber auch die Eingabe der Vorgabewerte zu ermöglichen. Auf spezielle Eingabemittel kann dadurch vermiesen werden. Dies kann beispielsweise dadurch erfolgen, dass auf dem Display ein entsprechendes Diagramm angezeigt wird, dessen Achsen der ersten und der zweiten physikalischen Größe zugeordnet sind, beispielsweise ein HQ-Diagramm, mittels welchem dann die Vorgabewerte durch Berührung eines bestimmten Punktes auf dem Display innerhalb des Diagramms festgelegt werden. Die Eingabe der Vorgabewerte erfolgt in dieser Variante gleichzeitig, d.h. nicht zeitlich nacheinander, gleichwohl aber unabhängig voneinander, da sich die Vorgabewerte nicht gegenseitig bedingen. Vielmehr kann grundsätzlich ein beliebiger Punkt innerhalb des Diagramms berührt und der Betriebspunkt damit festgelegt werden, jedenfalls soweit dies technisch sinnvoll ist. Anschließen kann die aufgrund einer werksseitigen oder anwenderdefinierten Voreinstellung ermitte Betriebskurve und/ oder Betriebsbereichsbegrenzung auf dem Display angezeigt werden, so dass der Installateur unmittelbar ein optisches Feedback zu seiner Eingabe erhält.

Durch weitere Eingaben kann er dann gegebenenfalls wählen oder ändern, welche Betriebskurve und/ oder welche Betriebsbereichsbegrenzung er alternativ zu einer Werkseinstellung oder zuvor vorgenommenen Einstellung wünscht, indem er beispielsweise zwischen verschiedenen, an der Pumpenelektronik verfügbaren Betriebsarten (Konstantdruckkurve, Proportionaldruckkurve, quadratische Regelkurve, Stellerbetrieb mit konstanter Drehzahl, dynamische Anpassung, etc.) und/ oder Betriebsbereichbegrenzungen wählt.

Weitere Merkmale und Vorteile der Erfindung werden nachfolgend anhand von Ausführungsbeispielen und der beigefügten Figuren näher erläutert. Sämtliche aus den Ansprüchen, der Beschreibung und den Figuren offenbarten Ausführungsvarianten und einzelnen Merkmale sind sowohl für sich allein betrachtet als auch in Kombination Teil der vorliegenden Erfindung. Es zeigen:

Figur 1:    Pumpenkennfeld in Form eines HQ-Diagramms eines Pumpenaggregats mit Anlagenkurve, Nennpunkt und Proportionaldruck-Regelkurve

Figur 2a-e   Erfindungsgemäße Betriebspunktvorgabe im HQ-Diagramm in Verbindung mit verschiedenen Regelarten

Figur 3a-g   Erfindungsgemäße Betriebspunktvorgabe im HQ-Diagramm in Verbindung mit verschiedenen Betriebsbereichsbegrenzungen

Figur 4a-I   Erfindungsgemäße Betriebspunktvorgabe im HQ-Diagramm in Verbindung mit verschiedenen Regelarten und Betriebsbereichsbegrenzungen

Figur 5:    Veranschaulichung der Einstellbegrenzung für den Förderstrom

Figur 1 zeigt ein klassisches HQ-Diagramm eines Pumpenaggregats mit entsprechendem Pumpenkennfeld bestehend aus mehreren Pumpenkurven, entlang welcher die Drehzahl jeweils konstant ist. Mit der Bezugsziffer 1 ist die maximale Pumpenkurve gekennzeichnet, bei der die maximale Drehzahl $n_{max}$ vorliegt. In dem HQ-Diagramm ist ferner die Anlagenkurve $H_A$ des hydraulischen Systems dargestellt, in das das Pumpenaggregat integriert ist. Die Anlagenkurve $H_A$ entspricht einer Parabel. Auf der Anlagenkurve $H_A$ ist ein Betriebspunkt $B_{Nenn}$ ausgewiesen, der den Auslegungspunkt des hydraulischen Systems angibt. Der Betriebspunkt $B_{Nenn}$ ist durch einen Nennwert $H_{Nenn}$ für die Förderhöhe H und einen Nennwert $Q_{Nenn}$ für den Förderstrom Q definiert. Ferner ist in das HQ-Diagramm eine Proportionaldruck-Regelkurve 2b als Betriebskurve eingezeichnet, entlang welcher das Pumpenaggregat geregelt wird.

Die Regelkurve 2b hat einen Schnittpunkt mit der Maximalkurve 1 bei einer Förderhöhe $H_{max}$ und eine Nullförderhöhe $H_0$ (Förderhöhe bei Volumenstrom 0). Durch Anwendung des erfindungsgemäßen Verfahrens wird erreicht, dass diese Regelkurve 2b im Pumpenkennfeld so liegt, dass der Betriebspunkt $B_{Nenn}$ auf ihr liegt.

Um dies zu erreichen, wird zur Ermittlung und Einstellung der Regelkurve 2b anstelle der Förderhöhe $H_{max}$ im Schnittpunkt der Regelkurve 2b mit der Maximalkurve 1, die Nennförderhöhe $H_{Nenn}$ vorgegeben und Nullförderhöhe $H_0$ als die Hälfte der Nennförderhöhe $H_{Nenn}$ definiert. Die mathematische Gleichung für die Regelkurve 2b lautet dann

$$H_2(Q) = \frac{1}{2} H_{Nenn} \left( \frac{Q}{Q_{Nenn}} + 1 \right).$$

Diese Gleichung kann in der Pumpenelektronik des Pumpenaggregats hinterlegt sein. Sie beschreibt die Betriebskurve allgemein als mathematischen Zusammenhang zwischen einem ersten Vorgabewert $H_{set}$ einer ersten physikalischen Größe und einem zweiten Vorgabewert $Q_{set}$ einer zweiten physikalischen Größe, wobei die Vorgabewerte gemeinsam einen bestimmten Betriebspunkt $B_{set}$ definieren, durch den die Betriebskurve verlaufen soll.

Die erste physikalische Größe ist in dem vorliegenden Beispiel die Förderhöhe H und die zweite physikalische Größe der Förderstrom Q. Die beiden Vorgabewerte $H_{set}$, $Q_{set}$ werden an der Pumpenelektronik beispielsweise von einem Installateur bei der Inbetriebnahme des Pumpenaggregats numerisch eingestellt. Damit die Regelkurve 2b durch den Nennpunkt des hydraulischen Systems verläuft, werden als Vorgabewerte die Nennförderhöhe $H_{Nenn}$ und der Nennförderstrom $Q_{Nenn}$ verwendet.

Figur 1 zeigt lediglich ein Beispiel für die Anwendung des erfindungsgemäßen Verfahrens. Anstelle einer Proportionaldruck-Regelkurve als Betriebskurve, entlang welcher das Pumpenaggregat geregelt oder gesteuert wird, können beliebige andere Betriebskurven verwendet werden. Dies wird anhand der Figurengruppe 2a bis 2e veranschaulicht. Figurengruppe 3a bis 3g veranschaulicht demgegenüber die Verwendung des erfindungsgemäßen Verfahrens respektive der Betriebspunktvorgabe für eine Betriebsbereichsbegrenzung. Figurengruppe 4a bis 4l veranschaulicht schließlich Beispielfälle, bei denen die Betriebspunktvorgabe für eine Kombination aus einer Betriebskurve, auf der der vorgegebene Betriebspunkt liegt, und einer Betriebsbereichsbegrenzung verwendet wird.

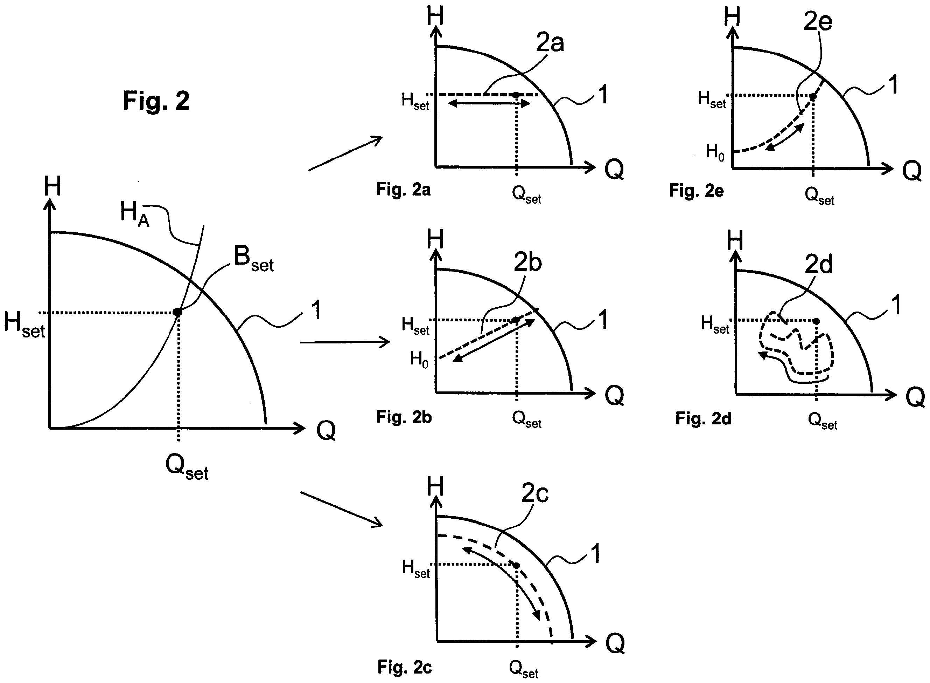

In Figur 2a wird aus den Vorgabewerten $H_{set}$, $Q_{set}$ eine Konstantdruck-Regelkurve 2a ($\Delta$p-c) ermittelt, die durch den Betriebspunkt $B_{set}$ verläuft, wobei anzumerken ist, dass für diesen Fall der zweite Vorgabewert eigentlich nicht nötig ist. Die Konstantdruck-Regelkurve 2a ist vielmehr bereits durch den ersten Vorgabewert $H_{set}$ vollständig definiert. Der Doppelpfeil zeigt hier und nachfolgend an, dass entlang der Konstantdruck-Regelkurve 2a geregelt wird, soweit jedenfalls nichts anderes beschrieben wird. Dies bedeutet, dass nur Betriebspunkte auf der jeweiligen Betriebskurve eingestellt werden. Eine solche Regelkurve 2a ist bei einem hydraulischen System mit Heiz- oder Kühlkreis mit ventilgeregelten Verbrauchern vorteilhaft, da dort der Druckverlust hauptsächlich in den Verbrauchern und / oder deren Einzelzuleitungen liegt. Verbraucher können hier Heizkreise einer Fußbodenheizung, Heizkörper mit Etagenverteiler oder Kühldecken sein.

Figur 2b entspricht dem Beispiel in Figur 1 so dass auf die vorstehenden Ausführungen verwiesen wird. Eine solche Regelkurve 2b ist bei einem hydraulischen System mit Heiz- oder Kühlkreis mit ventilgeregelten Verbrauchern von Vorteil, wenn der Druckverlust etwa zur einen Hälfte in den Verbrauchern und / oder deren Einzelzuleitungen sowie etwa zur anderen Hälfte in Zuleitungen, die mehrere oder alle Verbraucher versorgen, und / oder im Erzeuger liegt. Dies kann beispielsweise bei einer Heizungsanlage mit Heizkörpern oder bei Gebläsekonvektoren mit baumförmig verzweigten Zuleitungen oder ringförmigen Zuleitungen der Fall sein.

In Figur 2c wird aus den Vorgabewerten $H_{set}$, $Q_{set}$ eine Pumpenkurve 2c (n = const) ermittelt, die durch den Betriebspunkt $B_{set}$ verläuft. Dabei wird diejenige Drehzahl $n_{set}$ berechnet, die erforderlich ist, um den vorgegebenen Betriebspunkt $B_{set}$ einzustellen. Der Doppelpfeil zeigt hier an, dass das Pumpenaggregat entlang der Pumpenkurve 2c, also mit konstanter Drehzahl gesteuert wird. Eine solche Betriebskurve 2c ist bei einem hydraulischen System mit Heiz- oder Kühlkreis mit ventilgeregelten Verbrauchern vorteilhaft, wenn zumindest ein Überströmventil zur Sicherstellung eines Mindestvolumenstroms vorhanden sind. Bei kleinen Volumenströmen führt der steigende Differenzdruck zum Öffnen des federdruckbelasteten Überströmventils. Beim Einstellen der Drehzahl ist darauf zu achten, dass bei Förderhöhe = Öffnungsdruck ein ausreichend hoher Volumenstrom vorliegt.

In Figur 2e wird aus den Vorgabewerten $H_{set}$, $Q_{set}$ eine parabelförmige Regelkurve 2e ($\Delta$p-v) ermittelt, die durch den Betriebspunkt $B_{set}$ verläuft. Eine solche Betriebskurve 2e ist bei einem hydraulischen System mit Heiz- oder Kühlkreis mit ventilgeregelten Verbrauchern geeignet, wenn der Druckverlust hauptsächlich im Wärme- oder Kälteerzeuger vorliegt.

Figur 2d veranschaulicht den Verlauf der Betriebspunkte bei einer dynamischen Anpassung der Leistung des Pumpenaggregats an den Bedarf der Anlage, wie dies bei der zuvor genannten Funktion "Dynamic Adapt" aus DE 102011012211 A1 oder DE 102014018020.4 der Fall ist. Der Verlauf der Betriebspunkte bildet eine Trajektorie 2d. Der Pfeil entlang der Trajektorie 2d zeigt den Zeitfortschritt an, d.h. die Richtung, in die sich die Trajektorie 2d fortentwickelt. Die Betriebsart "dynamische Anpassung" ist hier neben dem rein gesteuerten (konstante Drehzahl) und dem kennlinienbasierten Regelbetrieb lediglich der Vollständigkeit halber dargestellt. Dabei ist die Betriebsart "dynamische Anpassung" ebenfalls ein geregelter Betrieb. Sie eignet sich vor allem für Systeme mit Heiz- oder Kühlkreise mit ventilgeregelten Verbrauchern, bei denen eine automatische Betriebspunktanpassung infolge unbekannter Druckverlustverteilung und -höhe erforderlich ist. Die erfindungsgemäße Betriebspunktvorgabe ist bei dieser Betriebsart nur in Verbindung mit einer Betriebsbereichsbegrenzung vorteilhaft, da sich die Trajektorie dynamisch entwickelt und eben nicht so gewählt werden kann, dass der Betriebspunkt $B_{set}$ auf ihr liegt.

Figurengruppe 3a bis 3g zeigt Beispiele für Betriebsbereichsbegrenzungen, die anhand der Vorgabewerte festgelegt werden können.

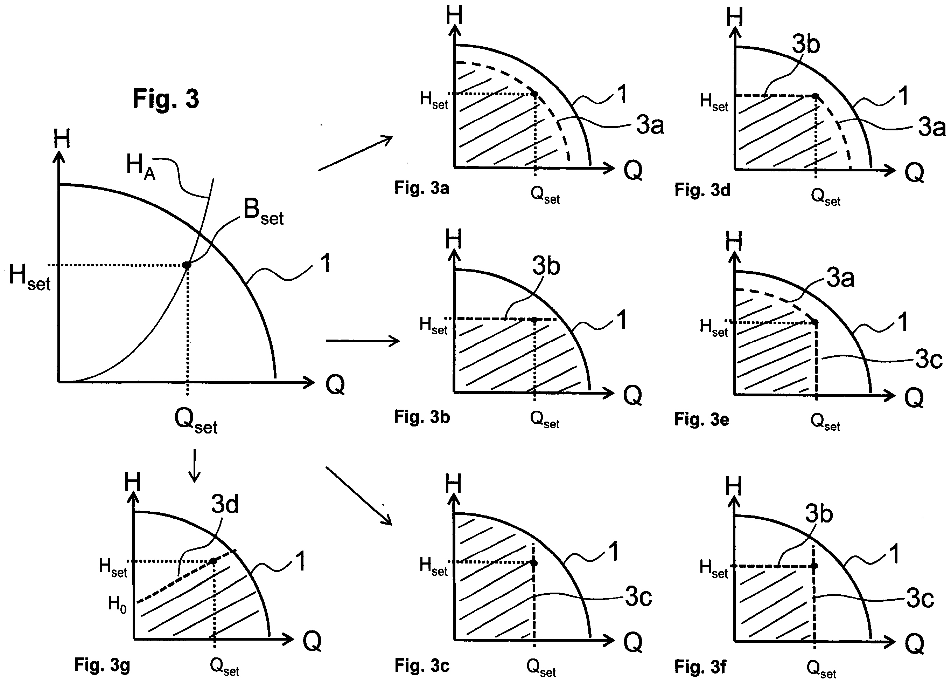

Bei dem Beispiel in Figur 3a wird eine Pumpenkurve 3a ermittelt, auf der der vorgegebene Betriebspunkt $B_{set}$ liegt, und als Grenzkurve verwendet, die eine obere Drehzahlgrenze für den Betrieb des Pumpenaggregats bildet. Die zulässigen Betriebspunkte liegen nur unterhalb oder auf dieser Pumpenkurve 3a.

Bei dem Beispiel in Figur 3b wird eine Konstantdruckkurve 3b ermittelt, auf der der vorgegebene Betriebspunkt $B_{set}$ liegt, und als Grenzkurve verwendet, die eine obere Förderhöhengrenze für den Betrieb des Pumpenaggregats bildet. Die Ermittlung ist hier recht einfach, weil die Förderhöhengrenze durch den ersten Vorgabewert gegeben ist. Die zulässigen Betriebspunkte liegen nur unterhalb oder auf dieser Konstantdruckkurve 3b.

Bei dem Beispiel in Figur 3c wird eine Konstantflusskurve 3c ermittelt, auf der der vorgegebene Betriebspunkt $B_{set}$ liegt, und als Grenzkurve verwendet, die eine obere Förderstromgrenze für den Betrieb des Pumpenaggregats bildet. Die Ermittlung ist hier recht einfach, weil die Förderstromgrenze durch den zweiten Vorgabewert gegeben ist. Die zulässigen Betriebspunkte liegen nur unterhalb oder auf dieser Konstantflusskurve 3c.

Bei dem Beispiel in Figur 3g wird eine Proportionaldruckkurve 3d ermittelt, auf der der vorgegebene Betriebspunkt $B_{set}$ liegt, und als Grenzkurve verwendet, die eine obere förderstromabhängige Förderhöhengrenze für den Betrieb des Pumpenaggregats bildet. Die zulässigen Betriebspunkte liegen nur unterhalb oder auf dieser Proportionaldruckkurve 3d.

Das Beispiel in Figur 3d ist eine Kombination aus den Beispielen der Figuren 3a und 3b. Die Grenzkurve ist hier durch zwei Teilgrenzkurven 3a, 3b gebildet, die in dem vorgegebenen Betriebspunkt $B_{set}$ miteinander verbunden

sind bzw. ineinander übergehen. Unterhalb des zweiten Vorgabewerts $Q_{set}$ ist die Grenzkurve durch eine Konstantdruckkurve 3b gebildet, oberhalb des zweiten Vorgabewerts $Q_{set}$ durch eine Pumpenkurve 3a. Die zulässigen Betriebspunkte liegen nur unterhalb oder auf den Teilgrenzkurven 3a, 3b.

Das Beispiel in Figur 3e ist eine Kombination aus den Beispielen der Figuren 3a und 3c. Die Grenzkurve ist hier ebenfalls durch zwei Teilgrenzkurven 3a, 3c gebildet, die in dem vorgegebenen Betriebspunkt $B_{set}$ miteinander verbunden sind bzw. ineinander übergehen. Unterhalb des zweiten Vorgabewerts $Q_{set}$ ist die Grenzkurve durch eine Pumpenkurve 3a gebildet. Betriebspunkt oberhalb des zweiten Vorgabewerts $Q_{set}$ werden nicht zugelassen, so dass eine Konstantflusskurve 3c, die durch den zweiten Vorgabewert gegeben ist, die Grenzkurve in Richtung steigender Förderströme bildet. Die zulässigen Betriebspunkte liegen nur unterhalb oder auf den Teilgrenzkurven 3a, 3c.

Das Beispiel in Figur 3f ist eine Kombination aus den Beispielen der Figuren 3b und 3c. Die Grenzkurve ist hier ebenfalls durch zwei Teilgrenzkurven 3b, 3c gebildet, die in dem vorgegebenen Betriebspunkt $B_{set}$ miteinander verbunden sind bzw. ineinander übergehen. Unterhalb des zweiten Vorgabewerts $Q_{set}$ ist die Grenzkurve durch eine Konstantdruckkurve 3b gebildet. Betriebspunkt oberhalb des zweiten Vorgabewerts $Q_{set}$ werden nicht zugelassen, so dass eine Konstantflusskurve 3c, die durch den zweiten Vorgabewert gegeben ist, die Grenzkurve in Richtung steigender Förderströme bildet. Die zulässigen Betriebspunkte liegen nur unterhalb oder auf den Teilgrenzkurven 3b, 3c.

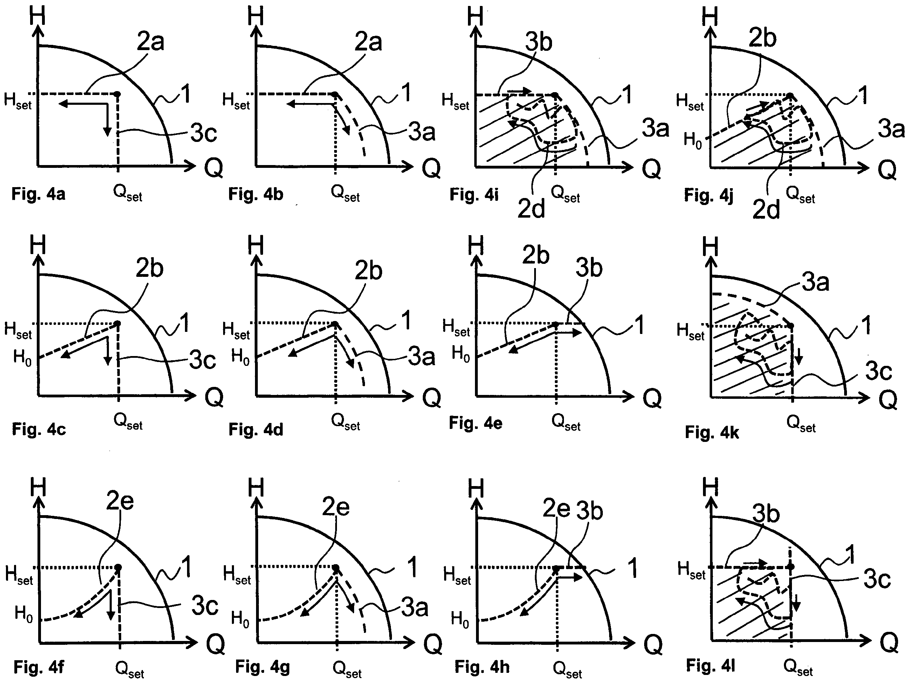

Figuren 4a bis 4l veranschaulichen verschiedene Fälle einer Kombination aus einer Betriebskurve einerseits und einer Betriebsbereichsbegrenzung anderseits.

Bei dem Beispiel in Figur 4a wird zunächst entlang einer Konstantdruckkurve 2a als Betriebskurve geregelt analog zu dem Beispiel in Fig. 2a. Diese ist durch den ersten Vorgabewert $H_{set}$ gegeben. In Richtung steigender Förderströme Q ist diese Konstantdruckkurve 2a jedoch durch eine Grenzkurve in Gestalt einer Konstantflusskurve 3c begrenzt. Diese ist durch den zweiten Vorgabewert $Q_{set}$ gegeben. Auf der Konstantdruckkurve 2a erfolgt folglich eine starke, weil förderhöhenunabhängige Maximalvolumenstrombegrenzung auf einen festen Volumenstromwert, die z.B. vorteilhaft ist, wenn Aufheizzuschläge schon im eingestellten Betriebspunkt enthalten sind. Den Übergang von Betriebskurve 2a zur Grenzkurve 3c bildet der vorgegebene Betriebspunkt. Für Förderströme Q unterhalb des zweiten Vorgabewerts $Q_{set}$ wird das Pumpenaggregat folglich auf der Konstantdruckkurve 2a geregelt. Würde die Anlagenkurve $H_A$ flacher werden und einen Schnittpunkt mit der Konstantdruckkurve 2a bei einem höheren Förderstrom besitzen, als es die Grenzkurve 3c erlaubt, wird das Pumpenaggregat entlang dieser Grenzkurve geregelt. Somit bewegen sich die von der Pumpenelektronik eingestellten Betriebspunkte des Pumpenaggregats entlang der Regelkurve 2a einerseits und der Grenzkurve 3c andererseits. Dies wird durch den Doppelpfeil veranschaulicht.

In dem Beispiel in Figur 4b ist die Grenzkurve gegenüber der Variante in Figur 4a durch eine Pumpenkurve 3a gebildet. Hierdurch wird eine weniger starke, weil förderhöhenabhängige, Maximalvolumenstrombegrenzung als im Beispiel von Fig. 4a erreicht, die z.B. sinnvoll ist, wenn Aufheizzuschläge im eingestellten Betriebspunkt nicht enthalten sind.

In dem Beispiel in Figur 4c ist die Betriebskurve gegenüber der Variante in Figur 4a durch eine Proportionaldruckkurve 2b analog zu dem Beispiel in Fig. 2b gebildet. Es erfolgt eine starke Maximalvolumenstrombegrenzung entlang der Proportionaldruckkurve auf einen festen, förderhöhenunabhängigen Volumenstrommaximalwert analog zu dem Beispiel in Fig. 4a, was dann vorteilhaft ist, wenn Aufheizzuschläge schon im eingestellten Betriebspunkt enthalten sind.

In dem Beispiel in Figur 4d sind die Betriebskurve gegenüber der Variante in Figur 4a durch eine Proportionaldruckkurve 2b und die Grenzkurve gegenüber der Variante in Figur 4a durch eine Pumpenkurve 3a gebildet. Hinsichtlich der Begrenzung des Betriebsbereichs durch die Pumpenkurve 3a gilt das zu Fig 4b Gesagte.

In dem Beispiel in Figur 4e sind die Betriebskurve gegenüber der Variante in Figur 4a durch eine Proportionaldruckkurve 2b und die Grenzkurve durch eine Konstantdruckkurve 3b gebildet. Entlang der Betriebskurve 2b steigt also die Förderhöhe H zunächst mit steigendem Förderstrom Q an, wird dann aber ab dem zweiten Vorgabewert $Q_{set}$ für weiter steigende Förderströme Q auf die den Wert des ersten Vorgabewerts $H_{set}$ begrenzt, so dass der Druck bzw. die Förderhöhe nicht über den ersten Vorgabewert hinaus ansteigen kann. Eine Volumenstrombegrenzung liegt hier nicht vor. Dies ist von Vorteil, wenn Aufheizzuschläge im eingestellten Betriebspunkt nicht enthalten sind und ferner Strömungsgeräusche bei hohen Leistungen vermieden werden sollen.

In dem Beispiel in Figur 4f ist die Betriebskurve gegenüber der Variante in Figur 4a durch eine quadratische Druckkurve 2e gebildet. Die Grenzkurve ist wieder durch einen festen Volumenstromwert definiert, wodurch eine starke Maximalvolumenstrombegrenzung erfolgt, z.B. für den Fall, dass Aufheizzuschläge schon im eingestellten Betriebspunkt enthalten sind.

Zusätzlich hierzu ist in dem Beispiel in Figur 4g die Grenzkurve durch eine Pumpenkurve 3a gebildet. Die Maximalvolumenstrombegrenzung ist hier folglich wieder schwächer für den Fall, dass Aufheizzuschläge im eingestellten Betriebspunkt nicht enthalten sind.

Figur 4h zeigt ein Beispiel in Anlehnung an Figur 4e, wobei hier jedoch die Betriebskurve durch eine quadratische Druckkurve 2e ersetzt ist. Die Festlegung der Grenzkurve auf eine konstante Maximalförderhöhe führt nicht zu einer Maximalvolumenstrombegrenzung. Dies ist von Vorteil, wenn Aufheizzuschläge im eingestellten Betriebspunkt nicht enthalten sind.

Allen Beispielen in den Figuren 4a bis 4h ist gemein, dass das Pumpenaggregat für Werte unterhalb des zweiten Vorgabewerts $Q_{set}$ entlang einer bestimmten Regelkurve geregelt wird und oberhalb des zweiten Vorgabewerts $Q_{set}$ eine Begrenzung des Betriebsbereichs durch eine Grenzkurve erfolgt. Regelkurve und Grenzkurve gehen in dem vorgegebenen Betriebspunkt ineinander über und werden aus dem ersten und dem zweiten Vorgabewert von der Pumpenelektronik ermittelt.

Figuren 4i bis 4l zeigen Anwendungen der Betriebsbereichsbegrenzung für die Betriebsart "dynamische Anpassung". Dabei sei angemerkt, dass eine automatische Betriebspunktanpassung zwei unterschiedliche Ziele verfolgen kann, nämlich entweder ohne bekannte Daten zum Förderhöhen- und Volumenstrombedarf zuverlässig die Versorgung sicherzustellen und im Vergleich zur Werkseinstellung Strom zu sparen oder mit / trotz bekannter Daten zum Förderhöhen- und Volumenstrombedarf im Nennpunkt gegenüber der optimal eingestellten Regelkurve weitere Energie zu sparen, vor allem im Teillastbereich.

Dabei entspricht das Beispiel in Figur 4i der in Figur 3d dargestellten Betriebsbereichsbegrenzung durch eine untere und eine obere Teilgrenzkurve 3b, 3a. Die untere Teilgrenzkurve ist durch eine Konstantdruckkurve 3b gebildet, die obere Teilgrenzkurve durch eine Pumpenkurve 3a. Dies führt zu einer weniger starken Maximalvolumenstrombegrenzung entsprechend der Variante in Fig. 4b, wobei gleichzeitig eine automatische Betriebspunktanpassung für zusätzliche Energieeinsparung im Teillastbereich erfolgt.

Gegenüber dem Beispiel in Fig. 4i ist bei der Variante in Figur 4j die erste Teilgrenzkurve durch eine Proportionaldruckkurve gebildet. Dies führt zu einer weniger starken Maximalvolumenstrombegrenzung entsprechend der Variante in Fig. 4d, wobei gleichzeitig eine automatische Betriebspunktanpassung für zusätzliche Energieeinsparung im Teillastbereich erfolgt.

Das Beispiel in Figur 4k entspricht der in Figur 3e dargestellten Betriebsbereichsbegrenzung durch eine untere und eine obere Teilgrenzkurve 3a, 3c. Die untere Teilgrenzkurve ist durch eine Pumpenkurve 3a, die obere Teilgrenzkurve durch eine Konstantflusskurve 3c gebildet. Dieses Beispiel ist hier lediglich der Vollständig halber erwähnt.

Schließlich entspricht das Beispiel in Figur 4l der in Figur 3f dargestellten Betriebsbereichsbegrenzung durch eine untere und eine obere Teilgrenzkurve 3a, 3c. Die untere Teilgrenzkurve ist durch eine Konstantdruckkurve 3b, die obere Teilgrenzkurve durch eine Konstantflusskurve 3c gebildet. Dies führt zu einer starken Maximalvolumenstrombegrenzung entsprechend der Variante in Fig. 4d, wobei gleichzeitig eine automatische Betriebspunktanpassung für zusätzliche Energieeinsparung im Teillastbereich erfolgt.

Alle dargestellten Ausführungsvarianten können gemeinsam in der Pumpenelektronik des Pumpenaggregats implementiert und bedarfsabhängig je nach Anwendungsfall vom Installateur ausgewählt und durch die Pumpenelektronik eingestellt werden. Dabei sind vorzugsweise Standardeinstellungen vorgesehen, so dass die Betriebseinstellung des Pumpenaggregats allein aufgrund der Eingabe des ersten und zweiten Vorgabewerts, vorzugsweise des Anlagennennpunktes, erfolgen kann.

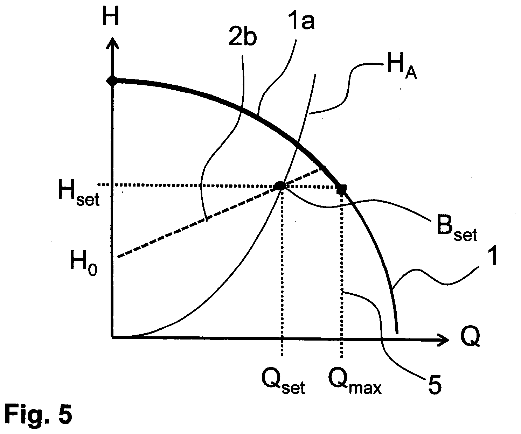

Figur 5 veranschaulicht eine Begrenzung des Einstellbereichs für den zweiten Vorgabewert $Q_{set}$ in Abhängigkeit des ersten Vorgabewerts $H_{set}$. Ist der erste Vorgabewert $H_{set}$ eingegeben, definiert ein auf der Maximalkurve 1 liegender Betriebspunkt mit diesem ersten Vorgabewert $H_{set}$ einen maximalen Wert $Q_{max}$ für den zweiten Vorgabewert. Der zweite Vorgabewert kann deshalb nur innerhalb dieser Grenzen 0 bis $Q_{max}$ eingestellt werden. Soll ein höherer Vorgabewert als $Q_{max}$ eingestellt werden, muss der erste Vorgabewert $H_{set}$ verringert werden.

## Patentansprüche

1. Verfahren zur Betriebseinstellung eines elektronisch gesteuerten oder geregelten Kreiselpumpenaggregats in einem hydraulischen System, insbesondere bei einer Erstinbetriebnahme, wobei zwei einen Betriebspunkt ($B_{set}$) definierende Vorgabewerte ($H_{set}$, $Q_{set}$) umfassend einen ersten Vorgabewert ($H_{set}$) für eine erste physikalische Größe (H) und einen zweiten Vorgabewert ($Q_{set}$) für eine zweite physikalische Größe (Q) direkt und voneinander getrennt eingegeben werden, **dadurch gekennzeichnet, dass** aus den Vorgabewerten ($H_{set}$, $Q_{set}$) anschließend eine Betriebskurve (2a, 2b, 2c, 2e) und/oder eine Betriebsbereichsbegrenzung (3a, 3b, 3c, 3d) für die Regelung oder Steuerung des Kreiselpumpenaggregats ermittelt und eingestellt wird.

2. Verfahren nach Anspruch 1, **dadurch gekennzeichnet, dass** die erste physikalische Größe die Förderhöhe (H) oder der Differenzdruck ($\Delta p$) des Kreiselpumpenaggregats und/oder die zweite physikalische Größe der Förderstrom (Q) des Pumpenaggregats ist.

3. Verfahren nach einem der vorherigen Ansprüche, **dadurch gekennzeichnet, dass** der Betriebspunkt ($B_{set}$) der Auslegungspunkt ($B_{Nenn}$) des hydraulischen Systems ist und der erste und zweite Vorgabewert ($H_{set}$, $Q_{set}$) jeweils einen Nennwert dieses Auslegungspunktes bilden.

4. Verfahren nach einem der vorherigen Ansprüche, **dadurch gekennzeichnet, dass** die Betriebskurve (2a, 2b, 2c, 2e) aus einem mathematischen Zusammenhang zwischen der ersten und der zweiten physikalischen Größe (H, Q) ermittelt wird, wobei die Vorgabewerte ($H_{set}$, $Q_{set}$) einen Punkt auf der Betriebskurve (2a, 2b, 2c, 2e) bilden.

5. Verfahren nach einem der vorherigen Ansprüche, **dadurch gekennzeichnet, dass** zur Betriebsbereichsbegrenzung zumindest eine Grenzkurve (3a, 3b,3c, 3d) aus einem hinterlegten mathematischen Zusammenhang zwischen der ersten und zweiten physikalischen Größe (H, Q) verwendet wird, wobei die Vorgabewerte ($H_{set}$, $Q_{set}$) einen Punkt auf der Grenzkurve (3a, 3b, 3c, 3d) bilden.

6. Verfahren nach Anspruch 5, **dadurch gekennzeichnet, dass** das Kreiselpumpenaggregat derart gesteuert oder geregelt wird, dass der aktuelle Betriebspunkt des Kreiselpumpenaggregats stets unterhalb oder auf der Grenzkurve (3a, 3b, 3c, 3d) liegt.

7. Verfahren nach Anspruch 5 oder 6, **dadurch gekennzeichnet, dass** das Kreiselpumpenaggregat für Werte unterhalb des zweiten Vorgabewerts ($Q_{set}$) entlang der Betriebskurve (2a, 2b, 2c, 2e) und für Werte oberhalb des zweiten Vorgabewerts ($Q_{set}$) entlang der Grenzkurve (3a, 3b,3c, 3d) geregelt oder gesteuert wird.

8. Verfahren nach einem der vorherigen Ansprüche, **dadurch gekennzeichnet, dass** für die Betriebsbereichsbegrenzung der erste Vorgabewert ($H_{set}$) als Maximalwert der ersten physikalischen Größe (H) und/oder der zweite Vorgabewert ($Q_{set}$) als Maximalwert der zweiten physikalischen Größe (Q) verwendet wird.

9. Verfahren nach einem der vorherigen Ansprüche, **dadurch gekennzeichnet, dass** bei der Eingabe des zweiten Vorgabewerts ($Q_{set}$) eine Einstellbegrenzung auf denjenigen Wertebereich ([0, $Q_{max}$]) erfolgt, den ein Abschnitt (1a) einer maximalen Pumpenkurve (1) bei dem momentan eingestellten ersten Vorgabewert ($H_{set}$) abdeckt.

10. Verfahren nach einem der vorherigen Ansprüche, **dadurch gekennzeichnet, dass** der aktuell eingestellte erste Vorgabewert ($H_{set}$) und/oder der aktuell eingestellte zweite Vorgabewert ($Q_{set}$) während seiner jeweiligen Eingabe in einem Diagramm auf einem Display dargestellt wird/werden, insbesondere einem Display einer Pumpenelektronik des Pumpenaggregats.

11. Verfahren nach Anspruch 10, **dadurch gekennzeichnet, dass** die grafische Darstellung eine Markierung des durch die aktuell eingestellten Vorgabewerte ($H_{set}$, $Q_{set}$) definierten Betriebspunktes ($B_{set}$) in dem HQ-Diagramm umfasst.

12. Verfahren nach Anspruch 10 oder 11, **dadurch gekennzeichnet, dass** bei der grafischen Darstellung eine oder jeweils eine Markierung des aktuell eingestellten ersten und/oder zweiten Vorgabewerts ($H_{set}$, $Q_{set}$) an den Achsen des HQ-Diagramms angezeigt wird.

13. Verfahren nach Anspruch 9 und einem der Ansprüche 10 bis 12, **dadurch gekennzeichnet, dass** während der Eingabe des zweiten Vorgabewerts ($Q_{set}$) eine Bereichsgrenze (5) für die Einstellbegrenzung im HQ-Diagramm dargestellt wird.

14. Kreiselpumpenaggregat mit einer Pumpeneinheit, einem diese antreibenden Elektromotor und einer Pumpenelektronik zu ihrer Steuerung oder Regelung, wobei zumindest zwei einen Betriebspunkt ($B_{set}$) definierende Vorgabewerte ($H_{set}$, $Q_{set}$) umfassend einen ersten Vorgabewert ($H_{set}$) für eine erste physikalische Größe (H) und einen zweiten Vorgabewert ($Q_{set}$) für eine zweite physikalische Größe(Q) direkt und voneinander getrennt an der Pumpenelektronik einstellbar sind, **dadurch gekennzeichnet, dass** die Pumpenelektronik eingerichtet ist, aus den Vorgabewerten ($H_{set}$, $Q_{set}$) anschließend eine Betriebskurve (2a, 2b, 2c, 2e) und/oder eine Betriebsbereichsbegrenzung (3a, 3b, 3c, 3d) für die Regelung oder Steuerung des Kreiselpumpenaggregats zu ermitteln und einzustellen.

15. Drehzahlregelbares Pumpenaggregat nach Anspruch 14, **dadurch gekennzeichnet, dass** es zur Ausführung einer der Ansprüche 1 bis 14 eingerichtet ist.

16. Computerprogrammprodukt umfassend ein auf einer Recheneinheit, insbesondere einer Pumpenelektronik ablauffähiges Programm mit Instruktionen zur Durchführung einer Betriebseinstellung eines elektronisch gesteuerten oder geregelten Kreiselpumpenaggregats in einem hydraulischen System, insbesondere bei einer Erstinbetriebnahme, wenn das Programm auf der Recheneinheit ausgeführt wird, wobei das Programm eingerichtet ist, eine direkte und voneinander getrennte Eingabe von zumindest zwei einen Betriebspunkt ($B_{set}$) definierenden Vorgabewerten ($H_{set}$,

$Q_{set}$) umfassend einen ersten Vorgabewert ($H_{set}$) für eine erste physikalische Größe (H) und einen zweiten Vorgabewert ($Q_{set}$) für eine zweite physikalische Größe (Q) entgegenzunehmen **dadurch gekennzeichnet, dass** das Programm weiterhin eingerichtet ist, aus den Vorgabewerten ($H_{set}$, $Q_{set}$) anschließend eine Betriebskurve (2a, 2b, 2c, 2e) und/oder eine Betriebsbereichsbegrenzung (3a, 3b, 3c, 3d) für die Regelung oder Steuerung des Kreiselpumpenaggregats zu ermittelt und einzustellen.

### Claims

1. Method for adjusting the operation of an electronically closed-loop or open-loop controlled centrifugal pump assembly in a hydraulic system, in particular when the assembly is first put into operation, in which two default values ($H_{set}$, $Q_{set}$) defining an operating point ($B_{set}$), comprising a first default value ($H_{set}$) for a first physical quantity (H) and a second default value ($Q_{set}$) for a second physical quantity (Q), are input directly and separately of each other, **characterised by** an operating curve (2a, 2b, 2c, 2e) and/or an operating range limit (3a, 3b, 3c, 3d) for the open-loop or closed-loop control of the centrifugal pump assembly being subsequently determined and set from the default values ($H_{set}$, $Q_{set}$).

2. Method according to claim 1, **characterised by** the first physical quantity being the pumping head (H) or the differential pressure ($\Delta p$) of the centrifugal pump assembly and/or the second physical quantity being the flow rate (Q) of the centrifugal pump assembly.

3. Method according to one of the preceding claims, **characterised by** the operating point ($B_{set}$) being the design point ($B_{Nenn}$) of the hydraulic system and the first and second default values ($H_{set}$, $Q_{set}$) respectively forming a rated value of this design point.

4. Method according to one of the preceding claims, **characterised by** the operating curve (2a, 2b, 2c, 2e) being determined from a mathematical relationship between the first and second physical quantity (H, Q), in which the default values ($H_{set}$, $Q_{set}$) form a point on the operating curve (2a, 2b, 2c, 2e).

5. Method according to one of the preceding claims, **characterised by** at least one limiting curve (3a, 3b,3c, 3d) from a stored mathematical relationship between the first and second physical quantity (H, Q) being used for operating range limiting, in which the default values ($H_{set}$, $Q_{set}$) form a point on the limiting curve (3a, 3b, 3c, 3d).

6. Method according to claim 5, **characterised by** the open-loop or closed-loop control of the centrifugal pump assembly being realised so that the actual operating point of the centrifugal pump assembly always lies below or on the limiting curve (3a, 3b, 3c, 3d).

7. Method according to claim 5 or 6, **characterised by** the open-loop or closed-loop control of the centrifugal pump assembly being realised along the operating curve (2a, 2b, 2c, 2e) for values below the second default value ($Q_{set}$) and along the limiting curve (3a, 3b,3c, 3d) for values above the second default value ($Q_{set}$).

8. Method according to one of the preceding claims, **characterised by** the first default value ($H_{set}$) being used as the maximum value for the first physical quantity (H) and/or the second default value ($Q_{set}$) as the maximum value for the second physical quantity (Q) for operating range limiting.

9. Method according to one of the preceding claims, **characterised by** the input for setting the second default value ($Q_{set}$) being limited to the value range ($[0, Q_{max}]$) that is covered by a section (1a) of a maximum pump curve (1) for the first default value ($H_{set}$) that is currently set.

10. Method according to one of the preceding claims, **characterised by** the first default value ($H_{set}$) that is currently set and/or the second default value ($Q_{set}$) that is currently set being shown in a diagram on a display during the respective input, notably on a display of pump electronics of the pump assembly.

11. Method according to claim 10, **characterised by** the graphical representation comprising a marking in the HQ diagram of the operating point ($B_{set}$) defined by the default values ($H_{set}$, $Q_{set}$) that are currently set.

12. Method according to claim 10 or 11, **characterised by** one or respectively one marking of the currently set first and/or second default value ($H_{set}$, $Q_{set}$) being shown on the axes of the HQ diagram in the graphical representation.

13. Method according to claim 9 and one of the claims 10 through 12, **characterised by** a boundary (5) for the setting limit being shown in the HQ diagram during the input of the second default value ($Q_{set}$).

14. Centrifugal pump assembly with a pump unit, an electric motor driving the same and pump electronics for its closed-loop or open-loop control, in which at least two default values ($H_{set}$, $Q_{set}$) defining an operating point ($B_{set}$), comprising a first default value ($H_{set}$) for a first physical quantity (H) and a second default value ($Q_{set}$) for a second physical quantity (Q), can be set directly and separately of each other on the pump electronics, **characterised by** the pump electronics being configured to subsequently determine and set an operating curve (2a, 2b, 2c, 2e) and/or an operating range limit (3a, 3b, 3c, 3d) for the open-loop or closed-loop control of the centrifugal pump unit from the default values ($H_{set}$, $Q_{set}$).

15. Rotational-speed-controllable pump assembly according to claim 14, **characterised by** the pump assembly being configured to execute one of the claims 1 through 14.

16. Computer program product comprising a program that can be executed on a central processing unit, notably pump electronics, with instructions for adjusting the operation of an electronically closed-loop or open-loop controlled centrifugal pump assembly in a hydraulic system, in particular when the assembly is first put into operation, when the program is executed on the central processing unit, in which the program is configured to accept a direct and separate input of at least two default values ($H_{set}$, $Q_{set}$) defining an operating point ($B_{set}$), comprising a first default value ($H_{set}$) for a first physical quantity (H) and a second default value ($Q_{set}$) for a second physical quantity (Q), **characterised by** the program being further configured to subsequently determine and set an operating curve (2a, 2b, 2c, 2e) and/or an operating range limit (3a, 3b, 3c, 3d) for the closed-loop or open-loop control of the centrifugal pump assembly from the default values ($H_{set}$, $Q_{set}$).

**Revendications**

1. Procédé de réglage du fonctionnement d'un groupe motopompe centrifuge à commande ou régulation électronique dans un système hydraulique, en particulier lors d'une première mise en service, dans lequel deux valeurs nominales ($H_{set}$, $Q_{set}$) définissant un point de fonctionnement ($B_{set}$), comprenant une première valeur nominale ($H_{set}$) pour une première grandeur physique (H) et une deuxième valeur nominale ($Q_{set}$) pour une deuxième grandeur physique (Q), sont saisies directement et séparément l'une de l'autre, **caractérisé en ce que,** à partir des valeurs nominales ($H_{set}$, $Q_{set}$), est ensuite déterminée et réglée l'une de plusieurs courbes de fonctionnement (2a, 2b, 2c, 2e) et/ou une limitation de plage de fonctionnement (3a, 3b, 3c, 3d) pour la régulation ou la commande du groupe motopompe centrifuge.

2. Procédé selon la revendication 1, **caractérisé en ce que** la première grandeur physique est la hauteur de refoulement (H) ou la pression différentielle ($\Delta p$) du groupe motopompe centrifuge et/ou la deuxième grandeur physique est le débit (Q) du groupe motopompe.

3. Procédé selon l'une des revendications précédentes, **caractérisé en ce que** le point de fonctionnement ($B_{set}$) est le point de conception ($B_{Nenn}$) du système hydraulique et les première et deuxième valeurs nominales ($H_{set}$, $Q_{set}$) constituent chacune une valeur nominale de ce point de conception.

4. Procédé selon l'une des revendications précédentes, **caractérisé en ce que** la courbe de fonctionnement (2a, 2b, 2c, 2e) est déterminée à partir d'une relation mathématique entre la première et la deuxième grandeur physique (H, Q), sachant que les valeurs nominales ($H_{set}$, $Q_{set}$) forment un point sur la courbe de fonctionnement (2a, 2b, 2c, 2e).

5. Procédé selon l'une des revendications précédentes, **caractérisé en ce que** pour la limitation de la plage de fonctionnement est utilisée au moins une courbe limite (3a, 3b, 3c, 3d) issue d'une relation mathématique enregistrée entre la première et la deuxième grandeur physique (H, Q), sachant que les valeurs nominales ($H_{set}$, $Q_{set}$) forment un point sur la courbe de fonctionnement (3a, 3b, 3c, 3d).

6. Procédé selon la revendication 5, **caractérisé en ce que** le groupe motopompe centrifuge est commandé ou régulé de telle façon que le point de fonctionnement actuel du groupe motopompe centrifuge se situe toujours en dessous ou sur la courbe limite (3a, 3b, 3c, 3d).

7. Procédé selon la revendication 5 ou 6, **caractérisé en ce que** le groupe motopompe centrifuge est régulé ou commandé pour des valeurs inférieures à la deuxième valeur nominale ($Q_{set}$) le long de la courbe de fonctionnement (2a, 2b, 2c, 2e) et pour des valeurs supérieures à la deuxième valeur nominale ($Q_{set}$) le long de la courbe limite (3a, 3b, 3c, 3d).

8. Procédé selon l'une des revendications précédentes, **caractérisé en ce qu'**est utilisée, pour la limitation de la plage de fonctionnement, la première valeur nominale ($H_{set}$) comme valeur maximale de la première grandeur physique (H) et/ou la deuxième valeur nominale ($Q_{set}$) comme valeur maximale de la deuxième grandeur physique (Q).

9. Procédé selon l'une des revendications précédentes, **caractérisé en ce que,** lors de la saisie de la deuxième valeur nominale ($Q_{set}$), une limitation de réglage est effectuée sur la plage de valeurs ($[0, Q_{max}]$) qu'une section (1a) d'une courbe de pompe maximale (1) couvre pour la première valeur nominale ($H_{set}$) actuellement réglée.

10. Procédé selon l'une des revendications précédentes, **caractérisé en ce que** la première valeur nominale ($H_{set}$) actuellement réglée et/ou la deuxième valeur nominale ($Q_{set}$) actuellement réglée est ou sont représentées pendant leur saisie respective dans un diagramme sur un écran, en particulier un écran d'une électronique de pompe du groupe motopompe.

11. Procédé selon la revendication 10, **caractérisé en ce que** la représentation graphique comprend un marquage du point de fonctionnement ($B_{set}$) défini par les valeurs nominales actuellement réglées ($H_{set}$, $Q_{set}$) dans le diagramme HQ.

12. Procédé selon la revendication 10 ou 11, **caractérisé en ce que,** la représentation graphique affiche sur les axes du diagramme HQ un ou respectivement un marquage de la première et/ou de la deuxième valeur nominale ($H_{set}$, $Q_{set}$) actuellement réglée.

13. Procédé selon la revendication 9 et l'une des revendications 10 à 12, **caractérisé en ce que,** pendant la saisie de la deuxième valeur nominale ($Q_{set}$), une limite de plage (5) pour la limitation de réglage est représentée dans le diagramme HQ.

14. Groupe motopompe centrifuge avec une unité de pompe, un moteur électrique entraînant celle-ci et une électronique de pompe pour sa commande ou sa régulation, sachant qu'au moins deux valeurs nominales ($H_{set}$, $Q_{set}$) définissent un point de fonctionnement ($B_{set}$) comprenant une première valeur nominale ($H_{set}$) pour une première grandeur physique (H) et une deuxième valeur nominale ($Q_{set}$) pour une deuxième grandeur physique (Q) pouvant être réglées directement et séparément l'une de l'autre sur l'électronique de pompe, **caractérisé en ce que** l'électronique de pompe est agencée pour déterminer et régler ensuite, à partir des valeurs nominales ($H_{set}$, $Q_{set}$), une courbe de fonctionnement (2a, 2b, 2c, 2e) et/ou une limitation de la plage de fonctionnement (3a, 3b, 3c, 3d) pour la régulation ou la commande du groupe motopompe centrifuge.

15. Groupe de pompage (1) selon les revendications 14 ou 13 **caractérisé en ce qu'**il est configuré pour l'exécution d'une des revendications 1 à 14.

16. Produit de programme informatique comprenant un programme pouvant être exécuté sur une unité de calcul, en particulier une électronique de pompe, avec des instructions pour l'exécution d'un réglage de fonctionnement d'un groupe motopompe centrifuge commandé ou régulé électroniquement dans un système hydraulique, en particulier lors d'une première mise en service, lorsque le programme est exécuté sur l'unité de calcul, sachant que le programme est agencé pour recevoir une saisie directe et séparée l'une de l'autre d'au moins deux valeurs nominales ($H_{set}$, $Q_{set}$) définissant un point de fonctionnement ($B_{set}$) et comprenant une première valeur nominale ($H_{set}$) pour une première grandeur physique (H) et une deuxième valeur nominale ($Q_{set}$) pour une deuxième grandeur physique (Q), **caractérisé en ce que** le programme est en outre conçu pour déterminer et régler ensuite, à partir des valeurs nominales ($H_{set}$, $Q_{set}$), une courbe de fonctionnement (2a, 2b, 2c, 2e) et/ou une limitation de la plage de fonctionnement (3a, 3b, 3c, 3d) pour la régulation ou la commande du groupe motopompe centrifuge.

Fig. 1

Fig. 2

Fig. 2a

Fig. 2b

Fig. 2c

Fig. 2d

Fig. 2e

Fig. 3

Fig. 3a

Fig. 3d

Fig. 3b

Fig. 3e

Fig. 3g

Fig. 3c

Fig. 3f

Fig. 4a    Fig. 4b    Fig. 4i    Fig. 4j

Fig. 4c    Fig. 4d    Fig. 4e    Fig. 4k

Fig. 4f    Fig. 4g    Fig. 4h    Fig. 4l

EP 3 443 228 B1

**Fig. 5**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20050252205 A1
- DE 102011012211 A1

- DE 102014018020